(19) Europäisches Patentamt
European Patent Office
Office européen des brevets

(11) **EP 4 564 482 A1**

(12) **EUROPEAN PATENT APPLICATION**
published in accordance with Art. 153(4) EPC

(43) Date of publication:
**04.06.2025 Bulletin 2025/23**

(21) Application number: 23846642.9

(22) Date of filing: **27.07.2023**

(51) International Patent Classification (IPC):
$H01M\ 4/62$ (2006.01)   $C08F\ 267/06$ (2006.01)
$C08F\ 279/02$ (2006.01)   $C08F\ 285/00$ (2006.01)
$H01M\ 4/13$ (2010.01)   $H01M\ 4/139$ (2010.01)
$H01M\ 10/052$ (2010.01)   $H01M\ 10/0566$ (2010.01)

(52) Cooperative Patent Classification (CPC):
C08F 267/06; C08F 279/02; C08F 285/00;
H01M 4/13; H01M 4/139; H01M 4/62;
H01M 10/052; H01M 10/0566; Y02E 60/10

(86) International application number:
**PCT/JP2023/027653**

(87) International publication number:
**WO 2024/024912 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 JP 2022122280**

(71) Applicant: **Zeon Corporation**
**Tokyo 100-8246 (JP)**

(72) Inventors:
• **HAYASAKA, Kentaro**
**Tokyo 100-8246 (JP)**
• **SONG, Ruichong**
**Tokyo 100-8246 (JP)**

(74) Representative: **Maiwald GmbH**
**Elisenhof**
**Elisenstraße 3**
**80335 München (DE)**

(54) **BINDER COMPOSITION FOR NONAQUEOUS SECONDARY BATTERY ELECTRODES, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(57)    Provided is a binder composition for a non-aqueous secondary battery electrode that has good tackiness and that enables the formation of an electrode for a non-aqueous secondary battery having excellent peel strength. The binder composition for a non-aqueous secondary battery electrode contains a particulate binder and water. A ratio of an average particle diameter Da of the particulate binder measured by dynamic light scattering at pH 8.0 relative to a volume-average particle diameter Db of the particulate binder measured by laser diffraction/scattering is within a specific range. When viscosity of the binder composition at pH 6.0 and viscosity of the binder composition at pH 8.0 as measured under specific conditions are respectively taken to be $\eta 1$ and $\eta 2$, a viscosity increase rate, which is calculated by formula (I): viscosity increase rate = $\{(\eta 2 - \eta 1)/\eta 1\}$, is within a specific range.

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

For example, Patent Literature (PTL) 1 to 4 describe the use of particulate polymers including monomer units such as an aromatic vinyl monomer unit, an aliphatic conjugated diene monomer unit, and a carboxyl group-containing monomer unit, for example, as binders contained in binder compositions.

CITATION LIST

Patent Literature

   PTL 1: JP6645430B2
   PTL 2: JP6627763B2
   PTL 3: JP5701519B2
   PTL 4: WO2010/114119A1

SUMMARY

(Technical Problem)

It is desirable for a binder composition to have good tackiness from a viewpoint of improving binder production efficiency.

On the other hand, it is also desirable to ensure sufficiently high close adherence between an electrode mixed material layer and a current collector (i.e., peel strength of an electrode) in a situation in which an electrode mixed material layer is formed from a slurry composition containing a binder composition in order to produce an electrode.

However, with the binder compositions of the conventional techniques described above, it has been difficult to maintain good tackiness of the binder composition while also increasing peel strength of an electrode that is formed using a slurry composition containing the binder composition. In particular, there has been demand for forming electrodes through high-speed slurry composition coating in recent years from a viewpoint of productivity, thus making it desirable to increase peel strength even in a situation in which coating with a slurry composition is performed at high speed.

Accordingly, one object of the present disclosure is to provide a binder composition for a non-aqueous secondary battery electrode that has good tackiness and that enables the formation of an electrode for a non-aqueous secondary battery having excellent peel strength.

Another object of the present disclosure is to provide a slurry composition for a non-aqueous secondary battery electrode that enables the formation of an electrode for a non-aqueous secondary battery having excellent peel strength.

Yet another object of the present disclosure is to provide an electrode for a non-aqueous secondary battery having excellent peel strength and a non-aqueous secondary battery including this electrode for a non-aqueous secondary battery.

(Solution to Problem)

The inventors conducted diligent investigation with the aim of solving the problems described above. The inventors discovered that with regards to a binder composition for a non-aqueous secondary battery electrode containing a particulate binder and water, by setting a ratio $Da_{(pH8.0)}/Db$ of an average particle diameter $Da_{(pH8.0)}$ of the particulate binder measured by dynamic light scattering at pH 8.0 relative to a volume-average particle diameter $Db$ of the particulate binder measured by laser diffraction/scattering within a specific range, and by also setting a viscosity increase rate calculated by formula (I), shown below:

$$\text{viscosity increase rate} = \{(\eta2 - \eta1)/\eta1\} \cdots (I)$$

within a specific range, given that viscosity of the binder composition for a non-aqueous secondary battery electrode at a temperature of 25°C, a solid content concentration of 30.0 mass%, and a pH of 6.0 is taken to be $\eta1$ and viscosity of the binder composition for a non-aqueous secondary battery electrode at a temperature of 25°C, a solid content concentration of 30.0 mass%, and a pH of 8.0 is taken to be $\eta2$, it is possible to maintain good tackiness of the binder composition while also causing an electrode that is formed using the slurry composition to display excellent peel strength. In this manner, the inventors completed the present disclosure.

Specifically, with the aim of advantageously solving the problems set forth above, the present disclosure provides:

[1] a binder composition for a non-aqueous secondary battery electrode comprising a particulate binder and water, wherein

a ratio $Da_{(pH8.0)}/Db$ of an average particle diameter $Da_{(pH8.0)}$ of the particulate binder measured by dynamic light scattering at pH 8.0 relative to a volume-average particle diameter $Db$ of the particulate binder measured by laser diffraction/scattering is 1.00 or more, and
when viscosity of the binder composition for a non-aqueous secondary battery electrode at a temperature of 25°C, a solid content concentration of 30.0 mass%, and a pH of 6.0 is taken to be $\eta1$ and viscosity of the binder composition for a non-aqueous secondary battery electrode at a temperature of 25°C, a solid content concentration of 30.0 mass%, and a pH of 8.0 is taken to be $\eta2$, a viscosity increase rate calculated by formula (I), shown below:

$$\text{viscosity increase rate} = \{(\eta2 - \eta1)/\eta1\} \cdots (I)$$

is ×1 or more.
A binder composition for which the ratio $Da_{(pH8.0)}/Db$ of a particulate binder and the viscosity increase rate are within specific ranges in this manner has good tackiness and can form an electrode having excellent peel strength.
Note that a "monomer unit" of a polymer referred to in the present disclosure is a "repeating unit derived from the monomer that is included in a polymer obtained using that monomer".
Also note that the average particle diameters $Da$ and $Db$ of a particulate binder and the viscosities $\eta1$ and $\eta2$ that are referred to in the present disclosure can, more specifically, be measured by methods described in the EXAMPLES section of the present specification.
Moreover, the present disclosure preferably provides:

[2] the binder composition for a non-aqueous secondary battery electrode according to the foregoing [1], wherein the particulate binder includes a first particulate binder and a second particulate binder having a different chemical composition from the first particulate binder.

As a result of the particulate binder including a first particulate binder and a second particulate binder, the binder composition has even better tackiness and can form an electrode having even better peel strength.
Furthermore, the present disclosure preferably provides:
[3] the binder composition for a non-aqueous secondary battery electrode according to the foregoing [2], wherein the first particulate binder has a volume-average particle diameter measured by laser diffraction/scattering of not less than 70 nm and not more than 200 nm, and the second particulate binder has a volume-average particle diameter measured by laser diffraction/scattering of not less than 150 nm and not more than 500 nm.
As a result of the volume-average particle diameters being within specific ranges, the binder composition has even better tackiness and can form an electrode having even better peel strength.

Also, the present disclosure preferably provides:

[4] the binder composition for a non-aqueous secondary battery electrode according to the foregoing [2] or [3], wherein

the first particulate binder has a core-shell structure including a core portion and a shell portion at least partially covering an outer surface of the core portion, and
the second particulate binder includes a surface layer portion and a core-shell particle that is located at an inner side of the surface layer portion and that includes a core portion and a shell portion at least partially covering an outer surface of the core portion.

As a result of particles having specific structures, the binder composition has even better tackiness and can form an electrode having even better peel strength.

Moreover, the present disclosure preferably provides:

[5] the binder composition for a non-aqueous secondary battery electrode according to the foregoing [4], wherein the shell portion of the first particulate binder and the surface layer portion of the second particulate polymer preferably each contain a polymer including an acidic functional group-containing monomer unit in a proportion of 80 mass% or more.

As a result of each of the particulate binders containing a polymer including an acidic functional group-containing monomer unit at a specific site, the binder composition has even better tackiness and can form an electrode having even better peel strength.

Furthermore, the present disclosure preferably provides:

[6] the binder composition for a non-aqueous secondary battery electrode according to the foregoing [4] or [5], wherein

the core portion of the first particulate binder contains a polymer including an aromatic vinyl monomer unit and an aliphatic conjugated diene monomer unit, and
the shell portion of the first particulate binder contains a polymer including an acidic functional group-containing monomer unit in a proportion of 80 mass% or more.

As a result of the core portion of the first particulate binder containing a polymer including an aromatic vinyl monomer unit and an aliphatic conjugated diene monomer unit and the shell portion of the first particulate binder containing a polymer including an acidic functional group-containing monomer unit in a specific proportion, the binder composition has even better tackiness and can form an electrode having even better peel strength.

Also, the present disclosure preferably provides:

[7] the binder composition for a non-aqueous secondary battery electrode according to any one of the foregoing [4] to [6], wherein

the core portion of the second particulate binder contains a polymer including a (meth)acrylic acid ester monomer unit in a proportion of 80 mass% or more,
the shell portion of the second particulate binder contains a polymer including an aromatic vinyl monomer unit in a proportion of 80 mass% or more, and
the surface layer portion of the second particulate binder contains a polymer including an acidic functional group-containing monomer unit in a proportion of 80 mass% or more.

As a result of the second particulate binder having a monomer unit chemical composition such as set forth above, the binder composition has even better tackiness and can form an electrode having even better peel strength.

Moreover, the present disclosure preferably provides:

[8] the binder composition for a non-aqueous secondary battery electrode according to the foregoing [7], wherein a proportion constituted by the core portion in the second particulate binder is not less than 50 mass% and not more than 95 mass%.

As a result of the proportion constituted by the core portion of the second particulate binder being within a specific range, the binder composition has even better tackiness and can form an electrode having even better peel strength.

Furthermore, the present disclosure preferably provides:

[9] the binder composition for a non-aqueous secondary battery electrode according to any one of the foregoing [1] to [8], having a pH of not lower than 6.0 and not higher than 10.0.

As a result of the pH being within the range set forth above, the binder composition has even better tackiness and can form an electrode having even better peel strength.

Also, the present disclosure provides:

[10] a slurry composition for a non-aqueous secondary battery electrode comprising: an electrode active material; and the binder composition for a non-aqueous secondary battery electrode according to any one of the foregoing [1] to [9].

A slurry composition such as set forth above has good tackiness and can form an electrode having excellent peel strength.

Moreover, the present disclosure provides:

[11] an electrode for a non-aqueous secondary battery comprising an electrode mixed material layer formed using the slurry composition for a non-aqueous secondary battery electrode according to the foregoing [10].

An electrode such as set forth above has excellent peel strength.

Furthermore, the present disclosure provides:

[12] a non-aqueous secondary battery comprising a positive electrode, a negative electrode, a separator, and an electrolyte solution, wherein at least one of the positive electrode and the negative electrode is the electrode for a non-aqueous secondary battery according to the foregoing [11].

A non-aqueous secondary battery such as set forth above has improved service life and excellent performance in terms of internal resistance and cycle characteristics as a result of an electrode having excellent peel strength being used therein.

(Advantageous Effect)

According to the present disclosure, it is possible to provide a binder composition for a non-aqueous secondary battery electrode that has good tackiness and that enables the formation of an electrode for a non-aqueous secondary battery having excellent peel strength.

Moreover, according to the present disclosure, it is possible to provide a slurry composition for a non-aqueous secondary battery electrode that enables the formation of an electrode for a non-aqueous secondary battery having excellent peel strength.

Furthermore, according to the present disclosure, it is possible to provide an electrode for a non-aqueous secondary battery having excellent peel strength and a non-aqueous secondary battery including this electrode for a non-aqueous secondary battery.

DETAILED DESCRIPTION

The following provides a detailed description of embodiments of the present disclosure.

A presently disclosed binder composition for a non-aqueous secondary battery electrode (hereinafter, also referred to simply as a "binder composition") can be used in production of a presently disclosed slurry composition for a non-aqueous secondary battery electrode (hereinafter, also referred to simply as a "slurry composition"). Moreover, a slurry composition for a non-aqueous secondary battery electrode that is produced using the presently disclosed binder composition for a non-aqueous secondary battery electrode can be used in production of an electrode of a non-aqueous secondary battery such as a lithium ion secondary battery. Furthermore, a feature of a presently disclosed non-aqueous secondary battery is that a presently disclosed electrode for a non-aqueous secondary battery (hereinafter, also referred to simply as an "electrode") formed using the presently disclosed slurry composition for a non-aqueous secondary battery electrode is used therein.

Note that the presently disclosed binder composition for a non-aqueous secondary battery electrode, slurry composition for a non-aqueous secondary battery electrode, and electrode for a non-aqueous secondary battery are preferably for a negative electrode, and the presently disclosed non-aqueous secondary battery is preferably a non-aqueous secondary battery in which the presently disclosed electrode for a non-aqueous secondary battery is used as a negative electrode.

(Binder composition for non-aqueous secondary battery electrode)

The presently disclosed binder composition for a non-aqueous secondary battery electrode contains a particulate binder and water. A ratio $Da_{(pH8.0)}/Db$ of an average particle diameter $Da_{(pH8.0)}$ of the particulate binder measured by dynamic light scattering at pH 8.0 relative to a volume-average particle diameter Db of the particulate binder measured by laser diffraction/scattering is within a specific range, and when viscosity of the binder composition at a temperature of 25°C, a solid content concentration of 30.0 mass%, and a pH of 6.0 is taken to be $\eta 1$ and viscosity of the binder composition at a temperature of 25°C, a solid content concentration of 30.0 mass%, and a pH of 8.0 is taken to be $\eta 2$, a viscosity increase rate calculated by formula (I), shown below:

$$\text{viscosity increase rate} = \{(\eta 2 - \eta 1)/\eta 1\} \cdots \text{(I)}$$

is also within a specific range. As a result of the presently disclosed binder composition for a non-aqueous secondary battery electrode containing the specific particulate binder described above, the presently disclosed binder composition for a non-aqueous secondary battery electrode has good tackiness and can cause an electrode that is formed using a slurry composition containing the binder composition to display excellent peel strength. Moreover, by using an electrode having excellent peel strength that is formed using a slurry composition containing the presently disclosed binder composition, it is possible to improve performance of a secondary battery. For example, it is possible to improve battery characteristics such as cycle characteristics and also to reduce internal resistance of the secondary battery.

Furthermore, by using the presently disclosed binder composition for a non-aqueous secondary battery electrode, it is possible to cause a formed electrode to display excellent peel strength even in a situation in which the electrode is produced through high-speed coating (application and drying) of a slurry composition that is produced using the binder composition.

<Particulate binder>

The particulate binder functions as a component for holding components such as an electrode active material in an electrode mixed material layer that is formed using a slurry composition containing the binder composition and thereby preventing shedding of these components from the electrode mixed material layer.

Moreover, the particulate binder is water-insoluble particles that are formed of a specific polymer. Note that when particles of a particulate binder or the like are referred to as "water-insoluble" in the present disclosure, this means that when 0.5 g of the particles are dissolved in 100 g of water at a temperature of 25°C, insoluble content is 90 mass% or more.

The particulate binder may be composed of one type of particulate binder or may include a plurality of types of particulate binders having different chemical compositions. A case in which the particulate binder includes two types of particulate binders (hereinafter, referred to as a "first particulate binder" and a "second particulate binder") having different chemical compositions is taken as an example to describe the structure of each particulate binder.

<<Structure of first particulate binder>>

The first particulate binder may be a particulate binder that has a core-shell structure including a core portion and a shell portion at least partially covering an outer surface of the core portion. The core portion in a case in which the first particulate binder has a core-shell structure preferably contains a polymer including an aromatic vinyl monomer unit and an aliphatic conjugated diene monomer unit. The shell portion in a case in which the first particulate binder has a core-shell structure preferably contains a polymer including an acidic functional group-containing monomer unit in a proportion of 80 mass% or more.

In a case in which the first particulate binder has a core-shell structure, a content ratio of the shell portion and the core portion (shell portion/core portion) in the particulate binder may be more than 0 parts by mass/100 parts by mass, is preferably 0.5 parts by mass/99.5 parts by mass or more, more preferably 1 part by mass/99 parts by mass or more, and even more preferably 2 parts by mass/98 parts by mass or more, and is preferably 15 parts by mass/85 parts by mass or less, more preferably 10 parts by mass/90 parts by mass or less, and even more preferably 5 parts by mass/95 parts by mass or less. When the proportion constituted by the core portion in the particulate binder is within any of the ranges set forth above, peel strength of an electrode and tackiness of the composition can be improved.

<<Monomer units forming core portion of first particulate binder>>

In a case in which the first particulate binder has a core-shell structure, the core portion preferably contains a polymer including an aromatic vinyl monomer unit and an aliphatic conjugated diene monomer unit. Moreover, the core portion may optionally further include an acidic functional group-containing monomer unit. Furthermore, the core portion may optionally further include monomer units other than an aromatic vinyl monomer unit, an aliphatic conjugated diene monomer unit, and an acidic functional group-containing monomer unit (hereinafter, also referred to as "other monomer units 1"). Specific examples of monomer units included in the core portion are described further below.

When the amount of all repeating units (monomer units) in the core portion is taken to be 100 mass%, the core portion includes an aromatic vinyl monomer unit in a proportion of preferably 5 mass% or more, more preferably 10 mass% or more, and even more preferably 15 mass% or more, and preferably 70 mass% or less, more preferably 60 mass% or less, and even more preferably 50 mass% or less. Moreover, when the amount of all repeating units (monomer units) in all polymers forming the first particulate binder is taken to be 100 mass%, the core portion includes an aromatic vinyl monomer unit in a proportion of preferably 5 mass% or more, more preferably 10 mass% or more, and even more preferably 15 mass% or more, and preferably 70 mass% or less, more preferably 60 mass% or less, and even more preferably 50 mass% or less.

When the amount of all repeating units (monomer units) in the core portion is taken to be 100 mass%, the core portion includes an aliphatic conjugated diene monomer unit in a proportion of preferably 30 mass% or more, more

6

preferably 45 mass% or more, and even more preferably 60 mass% or more, and preferably 90 mass% or less, more preferably 85 mass% or less, and even more preferably 80 mass% or less. Moreover, when the amount of all repeating units (monomer units) in all polymers forming the first particulate binder is taken to be 100 mass%, the core portion includes an aliphatic conjugated diene monomer unit in a proportion of preferably 30 mass% or more, more preferably 45 mass% or more, and even more preferably 60 mass% or more, and preferably 90 mass% or less, more preferably 85 mass% or less, and even more preferably 80 mass% or less.

From a viewpoint of the binder composition having even better tackiness and enabling formation of an electrode having even better peel strength, the total content of aromatic vinyl monomer units and aliphatic conjugated diene monomer units in the core portion when the amount of all repeating units (monomer units) in the core portion is taken to be 100 mass% is preferably 85 mass% or more, more preferably 90 mass% or more, even more preferably 95 mass% or more, particularly preferably 99 mass% or more, and most preferably 100 mass%.

In a case in which the core portion includes an acidic functional group-containing monomer unit, the core portion may include the acidic functional group-containing monomer unit in a proportion of preferably 0.1 mass% or more, more preferably 0.5 mass% or more, and even more preferably 1 mass% or more, and preferably 15 mass% or less, more preferably 10 mass% or less, and even more preferably 5 mass% or less when the amount of all repeating units (monomer units) in the core portion is taken to be 100 mass%. Moreover, in this case, the core portion may include the acidic functional group-containing monomer unit in a proportion of preferably 0.1 mass% or more, more preferably 0.5 mass% or more, and even more preferably 1 mass% or more, and preferably 15 mass% or less, more preferably 10 mass% or less, and even more preferably 5 mass% or less when the amount of all repeating units (monomer units) in all polymers forming the first particulate binder is taken to be 100 mass%.

In a case in which the core portion includes other monomer units 1, the core portion may include the other monomer units 1 in a proportion of preferably 0.5 mass% or more, more preferably 1 mass% or more, and even more preferably 5 mass% or more, and preferably 20 mass% or less, more preferably 15 mass% or less, and even more preferably 12 mass% or less when the amount of all repeating units (monomer units) in the core portion is taken to be 100 mass%. Moreover, in this case, the core portion may include the other monomer units 1 in a proportion of preferably 0.5 mass% or more, more preferably 1 mass% or more, and even more preferably 5 mass% or more, and preferably 20 mass% or less, more preferably 15 mass% or less, and even more preferably 12 mass% or less when the amount of all repeating units (monomer units) in all polymers forming the first particulate binder is taken to be 100 mass%.

<<Monomer units forming shell portion of first particulate binder>>

In a case in which the first particulate binder has a core-shell structure, the shell portion preferably contains a polymer including an acidic functional group-containing monomer unit. Specific examples of the "acidic functional group-containing monomer unit" are described further below. Moreover, in a case in which the core portion includes an acidic functional group-containing monomer unit, the acidic functional group-containing monomer unit that is included in the shell portion may be the same as or different from the acidic functional group-containing monomer unit that is included in the core portion.

When the amount of all repeating units (monomer units) in the shell portion is taken to be 100 mass%, the shell portion includes an acidic functional group-containing monomer unit in a proportion of preferably 80 mass% or more, more preferably 90 mass% or more, even more preferably 95 mass% or more, and particularly preferably 100 mass%. Moreover, when the amount of all repeating units (monomer units) in all polymers forming the first particulate binder is taken to be 100 mass%, the shell portion may include an acidic functional group-containing monomer unit in a proportion of preferably 0.1 mass% or more, more preferably 0.5 mass% or more, and even more preferably 1 mass% or more, and preferably 15 mass% or less, more preferably 10 mass% or less, and even more preferably 5 mass% or less. When the amount of acidic functional group-containing monomer units in the shell portion relative to the amount of all monomer units in all polymers forming the first particulate binder is not less than any of the lower limits set forth above, the binder composition has even better tackiness and can form an electrode having even better peel strength. On the other hand, when the amount of acidic functional group-containing monomer units in the shell portion relative to the amount of all monomer units in all polymers forming the first particulate binder is more than any of the upper limits set forth above, the degree of swelling of the first particulate binder decreases, cycle characteristics of a secondary battery deteriorate, and internal resistance increases.

<<Other matters relating to monomer units forming first particulate binder>>

When the amount of all repeating units (monomer units) in all polymers forming the first particulate binder is taken to be 100 mass%, the proportional content of acidic functional group-containing monomer units in all polymers forming the first particulate binder is preferably 0.5 mass% or more, more preferably 1 mass% or more, and even more preferably 2 mass% or more, and is preferably 15 mass% or less, more preferably 10 mass% or less, and even more preferably 5 mass% or less.

In a case in which the first particulate binder does not have a core-shell structure, the first particulate binder may be formed of the polymer that was described above as the polymer forming the "core portion of the first particulate binder". Note that in a case in which the first particulate binder does not have a core-shell structure, it is preferable that the second particulate binder has a structure including a surface layer portion.

<<Physical properties of first particulate binder>>

Various physical properties of the first particulate binder and a water dispersion containing the first particulate binder can be within any ranges so long as various physical properties of the binder composition for a non-aqueous secondary battery electrode are within specific ranges. The volume-average particle diameter Db of the first particulate binder measured by laser diffraction/scattering is preferably 70 nm or more, more preferably 90 nm or more, and even more preferably 110 nm or more, and is preferably 200 nm or less, more preferably 170 nm or less, and even more preferably 140 nm or less.

<<Structure of second particulate binder>>

The second particulate binder may have a core-shell structure including a core portion and a shell portion at least partially covering an outer surface of the core portion as part of or the entirety of the particulate binder. Moreover, the second particulate binder may have a structure including a surface layer portion. In a case in which the second particulate binder has a structure including a surface layer portion, the second particulate binder may include a core-shell particle that is located at an inner side of the surface layer portion and that includes a core portion and a shell portion at least partially covering an outer surface of the core portion. The surface layer portion of the second particulate polymer in a case in which the second particulate binder has a structure including a surface layer portion preferably contains a polymer including an acidic functional group-containing monomer unit in a proportion of 80 mass% or more. The core portion of the second particulate binder in a case in which the second particulate binder has a core-shell structure preferably contains a polymer including a (meth)acrylic acid ester monomer unit in a proportion of 80 mass% or more. The shell portion of the second particulate binder in a case in which the second particulate binder has a core-shell structure preferably contains a polymer including an aromatic vinyl monomer unit in a proportion of 80 mass% or more.

In a case in which the second particulate binder has a core-shell structure, the proportion constituted by the core portion in the second particulate binder is preferably 50 mass% or more, more preferably 60 mass% or more, and even more preferably 70 mass% or more, and is preferably 95 mass% or less, more preferably 90 mass% or less, and even more preferably 83 mass% or less.

In a case in which the second particulate binder has a core-shell structure, the proportion constituted by the shell portion in the second particulate binder is preferably 1 mass% or more, more preferably 5 mass% or more, and even more preferably 10 mass% or more, and is preferably 40 mass% or less, more preferably 30 mass% or less, and even more preferably 20 mass% or less.

In a case in which the second particulate binder has a structure including a surface layer portion, the proportion constituted by the surface layer portion in the second particulate binder is preferably 0.1 mass% or more, more preferably 0.5 mass% or more, and even more preferably 1 mass% or more, and is preferably 30 mass% or less, more preferably 20 mass% or less, and even more preferably 10 mass% or less.

<<Core portion>>

In a case in which the second particulate binder has a core-shell structure, the core portion preferably includes a (meth)acrylic acid ester monomer unit. Moreover, the core portion may optionally further include an acidic functional group-containing monomer unit, an unsaturated carboxylic acid amide monomer unit, and a cross-linkable monomer unit. Furthermore, the core portion may optionally further include monomer units other than a (meth)acrylic acid ester monomer unit, an acidic functional group-containing monomer unit, an unsaturated carboxylic acid amide monomer unit, and a cross-linkable monomer unit (hereinafter, also referred to as "other monomer units 2"). Specific examples of monomer units included in the core portion are described further below.

When the amount of all repeating units (monomer units) in the core portion is taken to be 100 mass%, the core portion includes a (meth)acrylic acid ester monomer unit in a proportion of preferably 80 mass% or more, more preferably 85 mass% or more, and even more preferably 90 mass% or more, and preferably 100 mass% or less, more preferably 99 mass% or less, and even more preferably 98 mass% or less. Moreover, when the amount of all repeating units (monomer units) in all polymers forming the second particulate binder is taken to be 100 mass%, the core portion includes a (meth)acrylic acid ester monomer unit in a proportion of preferably 50 mass% or more, more preferably 60 mass% or more, and even more preferably 70 mass% or more, and preferably 90 mass% or less, more preferably 80 mass% or less, and even more preferably 77 mass% or less.

When the amount of all repeating units (monomer units) in the core portion is taken to be 100 mass%, the core portion includes an acidic functional group-containing monomer unit in a proportion of preferably 0.12 mass% or more, more preferably 0.48 mass% or more, and even more preferably 0.96 mass% or more, and preferably 6 mass% or less, more preferably 3.6 mass% or less, and even more preferably 1.8 mass% or less. Moreover, when the amount of all repeating units (monomer units) in all polymers forming the second particulate binder is taken to be 100 mass%, the core portion includes an acidic functional group-containing monomer unit in a proportion of preferably 0.1 mass% or more, more preferably 0.4 mass% or more, and even more preferably 0.8 mass% or more, and preferably 5 mass% or less, more preferably 3 mass% or less, and even more preferably 1.5 mass% or less.

When the amount of all repeating units (monomer units) in the core portion is taken to be 100 mass%, the core portion includes an unsaturated carboxylic acid amide monomer unit in a proportion of preferably 0.1 mass% or more, more preferably 0.5 mass% or more, and even more preferably 1.0 mass% or more, and preferably 12 mass% or less, more preferably 6 mass% or less, and even more preferably 3 mass% or less. Moreover, when the amount of all repeating units (monomer units) in all polymers forming the second particulate binder is taken to be 100 mass%, the core portion includes an unsaturated carboxylic acid amide monomer unit in a proportion of preferably 0.1 mass% or more, more preferably 0.5 mass% or more, and even more preferably 1 mass% or more, and preferably 10 mass% or less, more preferably 5 mass% or less, and even more preferably 2 mass% or less.

When the amount of all repeating units (monomer units) in the core portion is taken to be 100 mass%, the core portion includes a cross-linkable monomer unit in a proportion of preferably 0.1 mass% or more, more preferably 0.5 mass% or more, and even more preferably 1.0 mass% or more, and preferably 12 mass% or less, more preferably 6 mass% or less, and even more preferably 3.0 mass% or less. Moreover, when the amount of all repeating units (monomer units) in all polymers forming the second particulate binder is taken to be 100 mass%, the core portion includes a cross-linkable monomer unit in a proportion of preferably 0.1 mass% or more, more preferably 0.5 mass% or more, and even more preferably 1 mass% or more, and preferably 10 mass% or less, more preferably 5 mass% or less, and even more preferably 2 mass% or less. When the amount of cross-linkable monomer units in the core portion of the second particulate binder is within any of the ranges set forth above, the binder composition has even better tackiness and can form an electrode having even better peel strength.

When the amount of all repeating units (monomer units) in the core portion is taken to be 100 mass%, the core portion includes other monomer units 2 in a proportion of preferably 0.1 mass% or more, more preferably 0.5 mass% or more, and even more preferably 1.0 mass% or more, and preferably 12 mass% or less, more preferably 6 mass% or less, and even more preferably 3.0 mass% or less. Moreover, when the amount of all repeating units (monomer units) in all polymers forming the second particulate binder is taken to be 100 mass%, the core portion includes other monomer units 2 in a proportion of preferably 0.1 mass% or more, more preferably 0.5 mass% or more, and even more preferably 1 mass% or more, and preferably 10 mass% or less, more preferably 5 mass% or less, and even more preferably 2 mass% or less.

<<Surface layer portion>>

In a case in which the second particulate binder has a structure including a surface layer portion, the surface layer portion includes an acidic functional group-containing monomer unit. Moreover, the surface layer portion may optionally further include monomer units other than an acidic functional group-containing monomer unit. Specific examples of the "acidic functional group-containing monomer unit" are described further below. Moreover, in a case in which the core portion includes an acidic functional group-containing monomer unit, the acidic functional group-containing monomer unit that is included in the surface layer portion may be the same as or different from the acidic functional group-containing monomer unit that is included in the core portion.

When the amount of all repeating units (monomer units) in the surface layer portion is taken to be 100 mass%, the surface layer portion includes an acidic functional group-containing monomer unit in a proportion of preferably 80 mass% or more, more preferably 90 mass% or more, even more preferably 95 mass% or more, and particularly preferably 100 mass%. Moreover, when the amount of all repeating units (monomer units) in all polymers forming the second particulate binder is taken to be 100 mass%, the surface layer portion includes an acidic functional group-containing monomer unit in a proportion of preferably 0.5 mass% or more, more preferably 1 mass% or more, and even more preferably 2 mass% or more, and preferably 15 mass% or less, more preferably 10 mass% or less, and even more preferably 5 mass% or less. When the amount of acidic functional group-containing monomer units in the surface layer portion relative to the amount of all monomer units in all polymers forming the second particulate binder is not less than any of the lower limits set forth above, the binder composition has even better tackiness and can form an electrode having even better peel strength. On the other hand, when the amount of acidic functional group-containing monomer units in the surface layer portion relative to the amount of all monomer units in all polymers forming the second particulate binder is more than any of the upper limits set forth above, the degree of swelling of the first particulate binder decreases, cycle characteristics of a secondary battery deteriorate, and internal resistance increases.

<<Shell portion>>

In a case in which the second particulate binder has a core-shell structure, the shell portion includes an aromatic vinyl monomer unit. Moreover, the shell portion may optionally further include monomer units other than an aromatic vinyl monomer unit. Specific examples of the "aromatic vinyl monomer unit" are described further below.

When the amount of all repeating units (monomer units) in the shell portion is taken to be 100 mass%, the shell portion includes an aromatic vinyl monomer unit in a proportion of preferably 80 mass% or more, more preferably 90 mass% or more, even more preferably 95 mass% or more, and particularly preferably 100 mass%. Moreover, when the amount of all repeating units (monomer units) in all polymers forming the particulate binder is taken to be 100 mass%, the shell portion includes an aromatic vinyl monomer unit in a proportion of preferably 1 mass% or more, more preferably 5 mass% or more, and even more preferably 10 mass% or more, and preferably 30 mass% or less, more preferably 25 mass% or less, and even more preferably 20 mass% or less.

<<Other matters relating to monomer units forming second particulate binder>>

The proportional content of acidic functional group-containing monomer units in all polymers forming the second particulate binder when the amount of all repeating units (monomer units) in all polymers forming the second particulate binder is taken to be 100 mass% is preferably 0.5 mass% or more, more preferably 1 mass% or more, and even more preferably 2 mass% or more, and is preferably 20 mass% or less, more preferably 15 mass% or less, and even more preferably 8 mass% or less.

In a case in which the second particulate binder has a core-shell structure but does not have a structure including a surface layer portion, the second particulate binder may be particles having a core-shell structure including the core portion and the shell portion described above. In a case in which the second particulate binder does not have a core-shell structure but does have a structure including a surface layer portion, the second particulate binder may be particles having a structure including the surface layer portion described above on particles that are formed of the polymer forming the "core portion of the second particulate binder" described above. In a case in which the second particulate binder does not have a core-shell structure and does not have a structure including a surface layer portion, the second particulate binder may be particles formed of the polymer forming the "core portion of the second particulate binder" described above. Note that in a case in which the second particulate binder does not have a structure including a surface layer portion, it is preferable that the first particulate binder has a core-shell structure.

<<Physical properties of second particulate binder>>

Various physical properties of the second particulate binder and a water dispersion containing the second particulate binder can be within any ranges so long as various physical properties of the binder composition for a non-aqueous secondary battery electrode are within specific ranges. The volume-average particle diameter Db of the second particulate binder measured by laser diffraction/scattering is preferably 150 nm or more, more preferably 300 nm or more, and even more preferably 400 nm or more, and is preferably 500 nm or less, more preferably 470 nm or less, and even more preferably 450 nm or less.

<<Content ratio of second particulate binder and first particulate binder in binder composition>>

A content ratio of the second particulate binder and the first particulate binder (second particulate binder/first particulate binder) in the binder composition may be 10 parts by mass/90 parts by mass or more, may be 20 parts by mass/80 parts by mass or more, may be 30 parts by mass/70 parts by mass or more, may be 90 parts by mass/10 parts by mass or less, may be 80 parts by mass/20 parts by mass or less, or may be 70 parts by mass/30 parts by mass or less. When the proportion constituted by the core portion in the particulate binder is within any of the ranges set forth above, peel strength of an electrode and tackiness of the composition can be improved.

<<Monomer units included in particulate binder>>

Specific examples of monomer units included in the particulate binder (for example, the first particulate binder and the second particulate binder) are as follows.

[(Meth)acrylic acid ester monomer unit]

Examples of (meth)acrylic acid ester monomers that can form a (meth)acrylic acid ester monomer unit in the particulate binder include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Note that one of these (meth)acrylic acid ester monomers may be used individually, or two or more of these (meth)acrylic acid ester monomers may be used in combination in a freely selected ratio.

[Acidic functional group-containing monomer unit]

Examples of acidic functional group-containing monomers that can form an acidic functional group-containing monomer unit in the particulate binder include phosphate group-containing monomer units, sulfo group-containing monomer units, and carboxyl group-containing monomer units. Of these examples, carboxyl group-containing monomer units are preferable.

A phosphate group-containing monomer is a monomer that includes a phosphate group and a polymerizable group that can be copolymerized with another monomer. The phosphate group-containing monomer may be a monomer that includes an $-O-P(=O)(-OR^{1a})-OR^{2a}$ group (where $R^{1a}$ and $R^{2a}$ are each independently a hydrogen atom or any organic group), or may be a salt of such a monomer. Specific examples of organic groups that may constitute $R^{1a}$ and $R^{2a}$ include aliphatic groups such as an octyl group and aromatic groups such as a phenyl group.

For example, a compound that includes a phosphate group and an allyloxy group can be used as a phosphate group-containing monomer. The compound including a phosphate group and an allyloxy group may be 3-allyloxy-2-hydroxypropane phosphoric acid.

A sulfo group-containing monomer is a monomer that includes a sulfo group and a polymerizable group that can be copolymerized with another monomer. Examples of sulfo group-containing monomers include sulfo group-containing monomers that do not include a functional group other than a sulfo group and a polymerizable group and salts of such sulfo group-containing monomers; monomers that include an amide group in addition to a sulfo group and a polymerizable group and salts of such monomers; and monomers that include a hydroxyl group in addition to a sulfo group and a polymerizable group and salts of such monomers.

Examples of sulfo group-containing monomers that do not include a functional group other than a sulfo group and a polymerizable group include monomers in which one of the conjugated double bonds of a diene compound such as isoprene or butadiene has been sulfonated, vinyl sulfonic acid, styrene sulfonic acid, and allyl sulfonic acid. Moreover, examples of salts of such monomers include lithium salts, sodium salts, and potassium salts. Examples of monomers that include an amide group in addition to a sulfo group and a polymerizable group include 2-acrylamido-2-methylpropane sulfonic acid (AMPS). Moreover, examples of salts of such monomers include lithium salts, sodium salts, and potassium salts. Examples of monomers that include a hydroxyl group in addition to a sulfo group and a polymerizable group include 3-allyloxy-2-hydroxypropane sulfonic acid (HAPS). Moreover, examples of salts of such monomers include lithium salts, sodium salts, and potassium salts. Of these examples, styrene sulfonic acid, 2-acrylamido-2-methylpropane sulfonic acid (AMPS), and salts thereof are preferable.

A carboxyl group-containing monomer can be a monomer that includes a carboxyl group and a polymerizable group. Specific examples of carboxyl group-containing monomers include ethylenically unsaturated carboxylic acid monomers.

Examples of ethylenically unsaturated carboxylic acid monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof. Examples of ethylenically unsaturated monocarboxylic acids include acrylic acid, methacrylic acid, and crotonic acid. Examples of derivatives of ethylenically unsaturated monocarboxylic acids include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid. Examples of ethylenically unsaturated dicarboxylic acids include maleic acid, fumaric acid, and itaconic acid. Examples of acid anhydrides of ethylenically unsaturated dicarboxylic acids include maleic anhydride, acrylic anhydride, methylmaleic anhydride, and dimethylmaleic anhydride. Examples of derivatives of ethylenically unsaturated dicarboxylic acids include methyl allyl maleate such as methylmaleic acid, dimethylmaleic acid, phenylmaleic acid, chloromaleic acid, dichloromaleic acid, and fluoromaleic acid; and maleic acid esters such as diphenyl maleate, nonyl maleate, decyl maleate, dodecyl maleate, octadecyl maleate, and fluoroalkyl maleates. Of these examples, ethylenically unsaturated monocarboxylic acids such as acrylic acid and methacrylic acid are preferable.

One of these acidic functional group-containing monomers may be used individually, or two or more of these acidic functional group-containing monomers may be used in combination. Accordingly, the water-insoluble particulate polymer may include just one type of acidic group-containing monomer unit or may include two or more types of acidic group-containing monomer units in combination.

[Unsaturated carboxylic acid amide monomer unit]

Examples of unsaturated carboxylic acid amide monomers that can form an unsaturated carboxylic acid amide monomer unit in the particulate binder include acrylamide, methacrylamide, N-methylolacrylamide, N-methylolmethacrylamide, N,N-dimethylacrylamide, and hydroxyethyl acrylamide. Note that one of these unsaturated carboxylic acid amide monomers may be used individually, or two or more of these unsaturated carboxylic acid amide monomers may be used in combination in a freely selected ratio.

[Cross-linkable monomer unit]

Examples of cross-linkable monomers that can form a cross-linkable monomer unit in the particulate binder include monomers that can form a crosslinked structure through polymerization without any specific limitations. A typical example of a cross-linkable monomer is a monomer that is thermally cross-linkable. More specifically, a cross-linkable monomer that includes a thermally cross-linkable group and one olefinic double bond per molecule or a cross-linkable monomer that includes two or more olefinic double bonds per molecule may be used.
The thermally cross-linkable group may be an epoxy group, an N-methylolamide group, an oxetanyl group, an oxazoline group, or a combination thereof, for example. Of these thermally cross-linkable groups, an epoxy group is preferable in terms of ease of cross-linking and cross-link density adjustment.
Examples of cross-linkable monomers including an epoxy group as a thermally cross-linkable group and also including an olefinic double bond include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.
Examples of cross-linkable monomers including an N-methylolamide group as a thermally cross-linkable group and also including an olefinic double bond include (meth)acrylamides including a methylol group such as N-methylol (meth)acrylamide.
Examples of cross-linkable monomers including an oxetanyl group as a thermally cross-linkable group and also including an olefinic double bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.
Examples of cross-linkable monomers including an oxazoline group as a thermally cross-linkable group and also including an olefinic double bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.
Examples of cross-linkable monomers including two or more olefinic double bonds per molecule include allyl (meth)acrylate, ethylene glycol di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxyethane, trimethylolpropane diallyl ether, allyl and vinyl ethers of polyfunctional alcohols other than those previously listed, triallylamine, methylenebisacrylamide, and divinylbenzene.
Note that in the present disclosure, "(meth)acrylate" indicates "acrylate" and/or "methacrylate".
One cross-linkable monomer may be used individually, or a plurality of cross-linkable monomers may be used in combination.

[Aromatic vinyl monomer unit]

Examples of aromatic vinyl monomers that can form an aromatic vinyl monomer unit in the particulate binder include aromatic monovinyl compounds such as styrene, α-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers can be used individually, or two or more of these aromatic vinyl monomers can be used in combination, it is preferable that one of these aromatic vinyl monomers is used individually.

[Aliphatic conjugated diene monomer unit]

Examples of aliphatic conjugated diene monomers that can form an aliphatic conjugated diene monomer unit in the particulate polymer include conjugated diene compounds having a carbon number of 4 or more such as 1,3-butadiene, isoprene, 2,3-dimethyl-1,3-butadiene, and 1,3-pentadiene. One of these aliphatic conjugated diene monomers can be used individually, or two or more of these aliphatic conjugated diene monomers can be used in combination. Moreover, of these aliphatic conjugated diene monomers, 1,3-butadiene and isoprene are preferable from a viewpoint of improving moisture resistance of an electrode, and 1,3-butadiene is more preferable.

[Other monomer units 1]

Examples of other monomer units 1 that can be further included in the first particulate polymer include, but are not specifically limited to, a hydrophilic monomer unit that does not include an acidic group (excluding aromatic vinyl monomers and aliphatic conjugated diene monomer units) and also a (meth)acrylic acid ester monomer unit, an unsaturated carboxylic acid amide monomer unit, and a cross-linkable monomer unit such as previously described. The hydrophilic monomer unit that does not include an acidic group (excluding aromatic vinyl monomer units and aliphatic conjugated diene monomer units) may be any of the "hydrophilic monomer units not including an acidic group" that are described below as examples of "other monomer units 2", with the exception of aromatic vinyl monomer units and aliphatic conjugated diene monomer units.

From a viewpoint of suppressing foaming of a slurry composition that contains the binder composition while also further reducing tack strength of the binder composition, it is preferable to use butyl acrylate or acrylonitrile as another monomer unit 1.

[Other monomer units 2]

Examples of other monomer units 2 that can be further included in the second particulate polymer include, but are not specifically limited to, a hydrophilic monomer unit that does not include an acidic group.

-Hydrophilic monomer unit not including acidic group-

The particulate polymer preferably further includes a hydrophilic monomer unit that does not include an acidic group as another monomer unit. The further inclusion of a hydrophilic monomer unit that does not include an acidic group in the particulate polymer enables reduction of tack strength of the binder composition.

Examples of hydrophilic monomers not including an acidic group that can form a hydrophilic monomer unit not including an acidic group in the particulate polymer include hydroxyl group-containing monomers; nitrile group-containing monomers such as (meth)acrylonitrile; and polyalkylene oxide structure-containing monomers. One of these hydrophilic monomers not including an acidic group may be used individually, or two or more of these hydrophilic monomers not including an acidic group may be used in combination in a freely selected ratio.

Note that in the present disclosure, "(meth)acryl" indicates "acryl" and/or "methacryl", and "(meth)acrylonitrile" indicates "acrylonitrile" and/or "methacrylonitrile".

Examples of hydroxyl group-containing monomers include ethylenically unsaturated alcohols such as (meth) allyl alcohol, 3-buten-1-ol, and 5-hexen-1-ol; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

One hydroxyl group-containing monomer may be used individually, or two or more hydroxyl group-containing monomers may be used in combination in a freely selected ratio.

A polyethylene oxide structure-containing monomer represented by formula (I): $CH_2=CR^1\text{-}COO\text{-}(CH_2CH_2O)_n\text{-}R^2$ (where $R^1$ represents a hydrogen atom or a methyl group, $R^2$ represents an alkyl group having a carbon number of not less than 1 and not more than 5, and n represents an integer of 5 or more) can, for example, be used as a polyalkylene oxide structure-containing monomer.

The carbon number of the alkyl group constituting $R^2$ in formula (I) is preferably 3 or less, more preferably 2 or less, and even more preferably 1.

Moreover, n in formula (I) is preferably 7 or more, and preferably 9 or more, and is preferably 25 or less, and more preferably 15 or less.

Examples include polyethylene oxide structure-containing monomers such as AM-90G, AM-130G, M-90G, and M-230G (product names) produced by Shin-Nakamura Chemical Co., Ltd. One of these polyethylene oxide structure-containing monomers can be used individually, or two or more of these polyethylene oxide structure-containing monomers can be used in combination.

The solubility in water of the hydrophilic monomer not including an acidic group is preferably 10,000 mg/L or more, more preferably 12,000 mg/L or more, and even more preferably 14,000 mg/L or more, and is preferably 2,000,000 mg/L or less, and more preferably 1,900,000 mg/L or less. When the solubility in water of the hydrophilic monomer not including an acidic group is not less than any of the lower limits set forth above, tack strength of the binder composition can be further reduced. On the other hand, when the solubility in water of the hydrophilic monomer not including an acidic group is not more than any of the upper limits set forth above, foaming of a slurry composition that contains the binder composition can be suppressed.

Note that the "solubility in water" referred to in the present disclosure means the solubility in water at 25°C.

From a viewpoint of suppressing foaming of a slurry composition that contains the binder composition while also further reducing tack strength of the binder composition, it is preferable to use acrylonitrile as another monomer unit 2.

<Properties of binder composition for non-aqueous secondary battery electrode>

<<Average particle diameter>>

[Average particle diameter Da measured by dynamic light scattering]

The average particle diameter Da of the particulate binder measured by dynamic light scattering, as measured at pH 8.0, is preferably 110 nm or more, more preferably 120 nm or more, and even more preferably 130 nm or more, and is preferably 1 $\mu$m or less, more preferably 600 nm or less, and even more preferably 500 nm or less.

The value of the average particle diameter Da of the particulate binder measured by dynamic light scattering can be adjusted through the types and amounts of monomers used to form the particulate binder, the method and conditions of polymerization, the structure of the particulate binder, the blending proportions of the particulate binder (for example, the content ratio of the second particulate binder and the first particulate binder), and so forth, for example.

Note that the average particle diameter Da of the particulate binder referred to in the present disclosure can be measured by the following method. First, a water dispersion (binder composition) containing the particulate binder is adjusted to a pH of 8.0. The pH adjustment can be performed through addition of an acid (for example, hydrochloric acid, sulfuric acid, nitric acid, acetic acid, or citric acid) or a base (for example, sodium hydroxide, potassium hydroxide, or ammonia water), for example. Next, a particle size analyzer having dynamic light scattering as a measurement principle (produced by Otsuka Electronics Co., Ltd.; model: nanoSAQLA) is used to measure a particle size distribution of the pH-adjusted water dispersion (binder composition), and the particle diameter (D50) at which cumulative frequency of light scattering intensity calculated from a small diameter end in the measured particle size distribution reaches 50% is taken to be the average particle diameter Da. Note that the measurement conditions in the dynamic light scattering are as follows.

Dispersion medium: Deionized water
Measurement temperature: 25 $\pm$ 1°C
Measurement concentration (solid content concentration): 0.5 mass%
Scattering angle: 168.8°
Light source laser wavelength: 660 nm

[Volume-average particle diameter Db measured by laser diffraction/scattering]

The volume-average particle diameter Db of the particulate binder measured by laser diffraction/scattering is preferably 50 nm or more, more preferably 70 nm or more, and even more preferably 80 nm or more, and is preferably 1 $\mu$m or less, more preferably 500 nm or less, and even more preferably 300 nm or less. When the volume-average particle diameter Db of the particulate binder measured by laser diffraction/scattering is within any of the specific ranges set forth above, peel strength of an electrode that is formed using the binder composition can be sufficiently improved. When the volume-average particle diameter Db of the particulate binder measured by laser diffraction/scattering is not less than any of the lower limits set forth above, electrolyte solution injectability of a secondary battery that includes an electrode formed using the binder composition can be improved, and internal resistance of the secondary battery can also be reduced.

The value of the volume-average particle diameter Db of the particulate binder measured by laser diffraction/-scattering can be adjusted through the types and amounts of monomers used to form a particle at an inner side of a surface layer portion in the particulate binder, the method and conditions of polymerization, the structure of the particulate binder, the blending proportions of the particulate binder (for example, the content ratio of the second particulate binder and the first particulate binder), and so forth, for example.

[Ratio of Da/Db]

A ratio $Da_{(pH8.0)}/Db$ of the average particle diameter $Da_{(pH8.0)}$ of the particulate binder measured by dynamic light scattering at pH 8.0 relative to the volume-average particle diameter Db of the particulate binder measured by laser diffraction/scattering is required to be 1.00 or more, is preferably 1.05 or more, and more preferably 1.10 or more, and is preferably 3.0 or less, more preferably 2.5 or less, and even more preferably 2.0 or less.

When the ratio of $Da_{(pH8.0)}/Db$ is not less than any of the lower limits set forth above, peel strength of an electrode that is formed using the binder composition can be sufficiently improved. Although it is not clear why peel strength of an electrode that is formed using the binder composition can be sufficiently improved when the ratio of $Da_{(pH8.0)}/Db$ is not less than any of the lower limits set forth above, the reason for this is presumed to be as follows. Specifically, in a situation in which a slurry composition that contains a binder composition is applied onto a current collector and is dried to form an electrode mixed material layer in production of an electrode, it is thought that by using a binder composition containing a particulate binder having a ratio of $Da_{(pH8.0)}/Db$ that is not less than any of the lower limits set forth above, it is possible to inhibit movement (migration) of the particulate binder to a surface-side of the electrode mixed material layer (i.e., an opposite side to a current collector-side). This results in good dispersion of the particulate binder in the electrode mixed material layer, and thereby enables sufficient improvement of peel strength of the electrode.

On the other hand, when the ratio of $Da_{(pH8.0)}/Db$ is not more than any of the upper limits set forth above, good tackiness of the binder composition can be maintained by inhibiting an excessive increase of viscosity of the binder composition.

<Viscosity of binder composition>

[Viscosity at each pH]

The viscosity of the binder composition can vary depending on the pH.

The viscosity η1 of the binder composition measured at pH 6.0 is preferably 1 mPa·s or more, more preferably 3 mPa·s or more, and even more preferably 5 mPa·s or more, and is preferably 1,000 mPa·s or less, more preferably 500 mPa·s or less, and even more preferably 100 mPa·s or less.

The viscosity η2 of the binder composition measured at pH 8.0 is preferably 5 mPa·s or more, more preferably 10 mPa·s or more, and even more preferably 30 mPa·s or more, and is preferably 10,000 mPa·s or less, more preferably 5,000 mPa·s or less, and even more preferably 1,500 mPa·s or less.

The value of the viscosity of the binder composition can be adjusted through the types and amounts of monomers used to form the particulate binder, the method and conditions of polymerization, the structure of the particulate binder, the blending proportions of the particulate binder (for example, the content ratio of the second particulate binder and the first particulate binder), and so forth, for example.

Note that the viscosity of the binder composition referred to in the present disclosure can be measured by the following method. The obtained binder composition is adjusted to a solid content concentration (TS) of 30 mass% through addition of water or through water removal and drying by concentrating and is adjusted to a pH of 6.0 or 8.0 through addition of an acid (for example, hydrochloric acid, sulfuric acid, nitric acid, acetic acid, or citric acid) or a base (for example, sodium hydroxide, potassium hydroxide, or ammonia water) as necessary. The viscosity of the binder composition is subsequently measured using a B-type viscometer. The temperature during viscosity measurement can be set as 25°C.

[Viscosity increase rate]

A viscosity increase rate of the binder composition is a value calculated by the following formula (I):

$$\text{viscosity increase rate} = \{(\eta 2 - \eta 1)/\eta 1\} \cdots (I)$$

based on the viscosity η1 of the binder composition measured at pH 6.0 and the viscosity η2 of the binder composition measured at pH 8.0. The viscosity increase rate is required to be 1.00 or more, is preferably 5 or more, and more preferably 10 or more, and is preferably 100 or less, more preferably 80 or less, and even more preferably 40 or less. When the viscosity increase rate is not less than any of the lower limits set forth above, good peel strength can be maintained. On the other hand, when the viscosity increase rate is not more than any of the upper limits set forth above, even better viscousness of the binder composition can be maintained by inhibiting an excessive increase of viscosity of the binder composition.

In a case in which the binder composition contains the first particulate binder and the second particulate binder, it is preferable that the binder composition satisfies at least one of: (i) the first particulate binder has a core-shell structure and a shell portion of the first particulate binder contains a polymer including an acidic functional group-containing monomer unit in a proportion of 80 mass% or more; and (ii) the second particulate binder includes a surface layer portion and the surface layer portion of the second particulate binder contains a polymer including an acidic functional group-containing monomer unit in a proportion of 80 mass% or more, and it is more preferable that the binder composition satisfies both of (i) and (ii) from a viewpoint of easily setting the average particle diameter, the average particle diameter ratio ($Da_{(pH8.0)}/Db$), the viscosity, and the viscosity increase rate within any of the ranges set forth above.

<<pH>>

The pH of the binder composition for a non-aqueous secondary battery electrode (pH of the aqueous phase) is preferably 6 or higher, and more preferably 7 or higher, and is preferably 10 or lower, more preferably 9 or lower, and even more preferably 8 or lower. When the pH of the binder composition is not lower than any of the lower limits set forth above, peel strength of an electrode that is formed using the binder composition can be further improved. On the other hand, when the pH of the binder composition is not higher than any of the upper limits set forth above, good tackiness of the binder composition can be maintained by inhibiting an excessive increase of viscosity of the binder composition.

Note that pH adjustment may be performed through addition of an alkali to the aqueous phase. The alkali may be lithium hydroxide, sodium hydroxide, potassium hydroxide, or ammonia water, with ammonia water being preferable because there is a low tendency for aggregates to form due to addition shock during alkali neutralization.

<Components that can be contained in binder composition for non-aqueous secondary battery electrode>

The binder composition for a non-aqueous secondary battery electrode may contain an acidic water-soluble polymer, an antioxidant, a preservative, a defoamer, and so forth in the aqueous phase. Moreover, the presently disclosed binder composition may contain a binder other than the previously described first particulate binder and second particulate binder (i.e., another binder). For example, a water-soluble polymer or a particulate polymer can be used as another binder.

<<Acidic water-soluble polymer>>

The acidic water-soluble polymer that can be contained in the aqueous phase of the binder composition for a non-aqueous secondary battery electrode may, for example, be produced through polymerization as a side product, during production of the particulate binder through polymerization, from monomer(s) that serves as a raw material of the particulate binder. Such an acidic water-soluble polymer may be a polymer that includes a carboxyl group-containing monomer unit and that optionally further includes an aromatic vinyl monomer unit and an aliphatic conjugated diene monomer unit, for example. Monomers that were previously described in the "Particulate binder" section can be used as monomers that can form various monomer units that can be included in the acidic water-soluble polymer, such as a carboxyl group-containing monomer unit, an aromatic vinyl monomer unit, and an aliphatic conjugated diene monomer unit.

The weight-average molecular weight of such an acidic water-soluble polymer is preferably 500 or more, more preferably 700 or more, and even more preferably 1,000 or more, and is preferably 20,000 or less, more preferably 15,000 or less, even more preferably 8,000 or less, further preferably 3,500 or less, and even further preferably 2,000 or less. When the weight-average molecular weight of the acidic water-soluble polymer is not less than any of the lower limits set forth above, peel strength of an electrode that is formed using the binder composition can be further improved. On the other hand, when the weight-average molecular weight of the acidic water-soluble polymer is not more than any of the upper limits set forth above, good tackiness of the binder composition can be maintained by inhibiting an excessive increase of viscosity of the binder composition.

Note that the acidic water-soluble polymer may be in the form of a salt (salt of an acidic water-soluble polymer). In other words, the term "acidic water-soluble polymer" as used in the present disclosure also encompasses salts of that acidic water-soluble polymer. Also note that when a polymer is said to be "water-soluble" in the present disclosure, this means that when 0.5 g of the polymer is dissolved in 100 g of water at a temperature of 25°C, insoluble content is less than 1.0 mass%.

<<Antioxidant>>

The antioxidant may be a hindered phenol antioxidant (for example, 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], or 2,4,6-tris(3',5'-di-tert-butyl-4'-hydroxybenzyl) mesitylene), an oligomeric phenolic antioxidant (for example, WINGSTAY L), a phosphite antioxidant (for example, 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-dit-butylphenyl) 2-ethylhexyl phosphite, or tris(2,4-di-tert-butylphenyl) phosphite), a sulfuric antioxidant (for example, didodecyl 3,3'-thiodipropionate), or the like.

The additive amount of the antioxidant is preferably 0.1 parts by mass or more, and more preferably 1 part by mass or more relative to 100 parts by mass of the particulate binder, and is preferably 10 parts by mass or less, and more preferably 5 parts by mass or less relative to 100 parts by mass of the particulate binder.

<<Preservative>>

The preservative may be a known preservative such as an isothiazoline compound or 2-bromo-2-nitro-1,3-propanediol, for example. The isothiazoline compound may be any of those described in JP2013-211246A, JP2005-097474A, JP2013-206624A, etc. without any specific limitations. Note that one preservative may be used individually, or two or more preservatives may be used in combination. Moreover, 1,2-benzisothiazolin-3-one, 2-methyl-4-isothiazolin-3-one, 5-chloro-2-methyl-4-isothiazolin-3-one, and 2-bromo-2-nitro-1,3-propanediol are preferable, and 1,2-benzisothiazolin-3-one is more preferable as the preservative.

The amount of the preservative that is contained in the binder composition is preferably 0.01 parts by mass or more relative to 100 parts by mass of the particulate binder, and is preferably 0.5 parts by mass or less, more preferably 0.4 parts by mass or less, and even more preferably 0.3 parts by mass or less relative to 100 parts by mass of the particulate binder. Formation of aggregates in the binder composition after long-term storage can be even further inhibited when the content of the preservative is 0.01 parts by mass or more per 100 parts by mass of the particulate binder, whereas sufficiently high peel strength of an electrode can be ensured when the content of the preservative is 0.5 parts by mass or less per 100 parts by mass of the particulate binder.

<Production method of binder composition>

In a case in which the particulate binder that is contained in the presently disclosed binder composition for a non-aqueous secondary battery electrode is composed of one type of particulate binder, the presently disclosed binder composition for a non-aqueous secondary battery electrode may be produced in a single reaction system as a water dispersion containing the particulate binder.

In a case in which the particulate binder that is contained in the presently disclosed binder composition for a non-aqueous secondary battery electrode includes a plurality of types of particulate binders having different chemical compositions, the presently disclosed binder composition for a non-aqueous secondary battery electrode may be produced by producing water dispersions containing particulate binders having the various chemical compositions in separate reaction systems and then mixing these water dispersions. Moreover, dilution with water, pH adjustment, or addition of additives may be performed after mixing of the water dispersions.

For example, in a case in which the presently disclosed binder composition for a non-aqueous secondary battery electrode contains the first particulate binder and the second particulate binder as the particulate binder, the first particulate binder and the second particulate binder may be polymerized in separate reaction systems to produce a water dispersion containing the first particulate binder and a water dispersion containing the second particulate binder, and then the water dispersion containing the first particulate binder and the water dispersion containing the second particulate binder may be mixed to produce the binder composition.

<<Production method of water dispersion containing particulate binder>>

A water dispersion containing a particulate binder can be produced through polymerization of monomers serving as a basis for structural units included in the particulate binder in an emulsion. This production method may be a batch emulsion polymerization method, an emulsion (Em) prop method, or a seeded polymerization method, for example.

The batch emulsion polymerization method may be performed by the following procedure, for example. Monomers serving as a basis for monomer units included in the particulate binder are mixed with water, an emulsifier, and a polymerization initiator. The mixture (emulsion) is then heated to perform a polymerization reaction. At the point at which a specific polymerization conversion rate is reached, cooling is performed to quench the reaction to yield a mixture containing a particulate binder. Unreacted monomer is removed from the mixture. The pH of this mixture is adjusted to within any of the previously described preferable pH ranges for the aqueous phase, and the previously described additives (for example, an antioxidant) are optionally added to obtain a water dispersion as a binder composition for a non-aqueous secondary battery electrode. Heating during the polymerization reaction may be performed to 40°C or higher, 45°C or higher, 50°C or higher, 55°C or higher, or 60°C or higher, for example, and may be performed to 90°C or lower, 85°C or lower, 80°C or lower, 75°C or lower, or 70°C or lower, for example. Removal of unreacted monomer from the mixture may be performed through thermal-vacuum distillation or through blowing in of steam, for example.

The Em prop method may be performed by the following procedure, for example. Monomers for core portion formation are mixed with water, an emulsifier, a polymerization initiator, and optionally a chain transfer agent. The mixture (emulsion) is heated and a polymerization reaction is performed until a specific polymerization conversion rate is reached to yield a mixture containing a seed particle polymer as a core portion. Next, monomers for shell portion formation and optionally an emulsifier and water are continuously added to the mixture, and polymerization is continued. In a case in which the second particulate binder is to be produced, monomers for surface layer portion formation and optionally an emulsifier and water are then continuously added to the mixture, and polymerization is continued. At the point at which a specific polymerization conversion rate is reached, cooling is performed to quench the reaction to yield a mixture containing a particulate binder. Unreacted monomer is removed from the mixture. The pH of this mixture is optionally adjusted to within any of the previously described preferable pH ranges for the aqueous phase, and the previously described additives (for example, an antioxidant) are optionally added to obtain a water dispersion containing the first particulate binder having a core-shell structure or the second particulate binder having a core-shell structure and a surface layer portion.

In the seeded polymerization, monomers for core portion formation, water, an emulsifier, a polymerization initiator, and optionally a chain transfer agent are mixed with a seed particle polymer that is formed of a polymer including one or more monomer units among monomer units for core portion formation, for example, and then a polymerization reaction, etc. are performed in the same manner as described above to obtain a mixture containing a seed particle polymer as a core portion. Next, monomers for shell portion formation and optionally an emulsifier and water are continuously added to the mixture, and polymerization is continued. In a case in which the second particulate binder is to be produced, monomers for surface layer portion formation (monomer units included in a polymer (B) such as an acidic functional group-containing monomer unit and optionally monomer units other than an acidic functional group-containing monomer unit) and optionally an emulsifier and water are then continuously added to the mixture, and polymerization is continued. At the point at which a specific polymerization conversion rate is reached, cooling is performed to quench the reaction to yield a mixture containing a particulate binder. Unreacted monomer is removed from the mixture.

The pH of this mixture is optionally adjusted to within any of the previously described preferable pH ranges for the aqueous phase, and the previously described additives (for example, an antioxidant) are optionally added to obtain a water dispersion containing the first particulate binder having a core-shell structure or the second particulate binder having a core-shell structure and a surface layer portion.

In a case in which the particulate binder includes two or more portions having different chemical compositions of monomers such as with the first particulate binder in a case in which the first particulate binder has a core-shell structure, for example, production of the binder composition may be performed by the following procedure including two or more stages of polymerization, for example. Monomers for core portion formation are mixed with water, an emulsifier, a chain transfer agent, and a polymerization initiator. The mixture is heated, and a polymerization reaction is performed until a specific polymerization conversion rate is reached to form a particle polymer corresponding to a core portion. Next, monomers for shell portion formation and optionally an emulsifier and water are continuously added to the reaction liquid, and polymerization is continued. At the point at which a specific polymerization conversion rate is reached, cooling is performed to quench the reaction to yield a mixture containing a particulate binder having a core-shell structure. Unreacted monomer is removed from the mixture. The pH of this mixture is adjusted to within any of the previously described preferable pH ranges, and the previously described additives (for example, an antioxidant) are optionally added to obtain a binder composition for a non-aqueous secondary battery electrode that contains the particulate binder having a core-shell structure and water.

In a case in which the particulate binder includes three or more portions having different chemical compositions of monomers such as with the second particulate binder in a case in which the second particulate binder has a core-shell structure and also has a structure including a surface layer portion, for example, production of the binder composition may be performed by the following procedure including three or more stages of polymerization, for example.

First, as a first stage of polymerization, monomers for core portion formation are mixed with water, an emulsifier, a chain transfer agent, and a polymerization initiator. The mixture is heated, and a polymerization reaction is performed until a specific polymerization conversion rate is reached to form a particle polymer constituting a core portion.

Next, as a second stage of polymerization, monomers for shell portion formation and optionally an emulsifier and water are continuously added to the reaction liquid, and polymerization is continued. At the point at which a specific polymerization conversion rate is reached, cooling is performed to quench the reaction to form a particle polymer containing water and a particulate binder that has a core-shell structure including a core portion and a shell portion.

Next, as a third stage of polymerization, monomers for surface layer portion formation and optionally an emulsifier and water are continuously added to the reaction liquid, and polymerization is continued. Unreacted monomer may be removed from the reaction liquid after each stage of polymerization. The pH of the reaction liquid after reaction is adjusted to within any of the previously described preferable pH ranges, and the previously described additives (for example, an antioxidant) are optionally added to obtain a water dispersion of a particulate binder that includes a surface layer portion and that also has a core-shell structure including a core portion and a shell portion.

The emulsifier used in production of the binder composition may be an alkyl diphenyl ether disulfonic acid, dodecylbenzenesulfonic acid, lauryl sulfuric acid, or a salt (for example, a potassium salt or a sodium salt) of any thereof, for example. The additive amount of the emulsifier is preferably 0.1 parts by mass or more, and more preferably 0.2 parts by mass or more relative to 100 parts by mass of the total amount of monomer units in polymers forming the particulate binder, and is preferably 10 parts by mass or less, and more preferably 5 parts by mass or less relative to 100 parts by mass of the total amount of monomer units in polymers forming the particulate binder.

The polymerization initiator used in production of the binder composition may be potassium persulfate, n-butyllithium, or ammonium persulfate, for example. The additive amount of the polymerization initiator is preferably 0.1 parts by mass or more, and more preferably 0.2 parts by mass or more relative to 100 parts by mass of the total amount of monomer units in polymers forming the particulate binder, and is preferably 10 parts by mass or less, and more preferably 5 parts by mass or less relative to 100 parts by mass of the total amount of monomer units in polymers forming the particulate binder.

The chain transfer agent used in production of the binder composition may be α-methylstyrene dimer, tert-dodecyl mercaptan, or 3-mercapto-1,2-propanediol, for example. The additive amount of the chain transfer agent is preferably 0.1 parts by mass or more, and more preferably 0.2 parts by mass or more relative to 100 parts by mass of the total amount of monomer units in polymers forming the particulate binder, and is preferably 10 parts by mass or less, and more preferably 5 parts by mass or less relative to 100 parts by mass of the total amount of monomer units in polymers forming the particulate binder.

<Tackiness of binder composition>

The presently disclosed binder composition set forth above has good tackiness.

A lower tack strength results in better productivity without the occurrence of adhesion to a dryer or the like during formation of an electrode mixed material layer. (Note that high tack strength is undesirable not only due to the start of strong adhesion to a wall of a dryer, a conveyer, or the like and reduction of production efficiency, but also because problems such as the inability to achieve uniform quality arise.) Moreover, lower tack strength results in lower adhesiveness to a roll during processing using a roll, and can be judged to indicate better roll processability.

Good tackiness means that there is a tack strength (N) of 8 N or less, and preferably 4 N or less when a probe made of SUS is used to perform a pressing operation with respect to one side of a film formed through drying of the binder composition under conditions of a pressing speed of 3 mm/s, a pressing load of 100 gf, and a pressing holding time of 1 s, and then the SUS probe is pulled upward with a pulling speed of 3 mm/s.

Note that the tack strength of the binder composition referred to in the present disclosure can be measured by a method described in the EXAMPLES section of the present specification.

(Slurry composition for non-aqueous secondary battery electrode)

The presently disclosed slurry composition is a composition that is used in an application of forming an electrode mixed material layer of an electrode. The presently disclosed slurry composition contains the presently disclosed binder composition and an electrode active material and may optionally further contain components other than the aforementioned components (hereinafter, referred to as "other components"). Moreover, the presently disclosed slurry composition has good tackiness as a slurry composition and enables formation of an electrode having excellent peel strength as a result of containing the binder composition set forth above. Furthermore, by using an electrode having excellent peel strength that has been formed using the presently disclosed slurry composition, it is possible to cause a secondary battery to display excellent performance. For example, it is possible to improve battery characteristics such as cycle characteristics and also to reduce internal resistance of the secondary battery.

<Amount of binder composition>

No specific limitations are placed on the amount of the binder composition in the slurry composition. For example, the amount of the binder composition can be set as an amount such that, in terms of solid content, the amount of the particulate binder is not less than 0.5 parts by mass and not more than 15 parts by mass per 100 parts by mass of the electrode active material.

<Electrode active material>

Any known electrode active material that is used in secondary batteries can be adopted as the electrode active material without any specific limitations. Specifically, any of the following electrode active materials can be used without any specific limitations as an electrode active material that can be used in an electrode mixed material layer of a lithium ion secondary battery, which is one example of a secondary battery, for example.

[Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Note that the transition metal may be Ti, V, Cr, Mn, Fe, Co, Ni, Cu, Mo, or the like, for example.

Specific examples of positive electrode active materials include, but are not specifically limited to, lithium-containing cobalt oxide ($LiCoO_2$), lithium manganate ($LiMn_2O_4$), lithium-containing nickel oxide ($LiNiO_2$), lithium-containing complex oxides of Co-Ni-Mn, lithium-containing complex oxides of Ni-Mn-Al, lithium-containing complex oxides of Ni-Co-Al, olivine-type lithium iron phosphate ($LiFePO_4$), olivine-type lithium manganese phosphate ($LiMnPO_4$), lithium-rich spinel compounds represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.

Note that one of the above-described positive electrode active materials may be used individually, or two or more of the above-described positive electrode active materials may be used in combination.

[Negative electrode active material]

A negative electrode active material that is compounded in a negative electrode mixed material layer of a negative electrode in a lithium ion secondary battery may be a carbon-based negative electrode active material, a metal-based negative electrode active material, a negative electrode active material that is a combination thereof, or the like, for example.

The carbon-based negative electrode active material can be defined as an active material that contains carbon as its main framework and into which lithium can be inserted (also referred to as "doping"). The carbon-based negative electrode active material may, more specifically, be a carbonaceous material such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), or hard carbon; or a graphitic material such as natural graphite or artificial graphite.

The metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can be used.

Of these metal-based negative electrode active materials, active materials containing silicon (silicon-based negative electrode active materials) are preferred. One reason for this is that the capacity of a lithium ion secondary battery can be increased through use of a silicon-based negative electrode active material.

The silicon-based negative electrode active material may be silicon (Si), an alloy of silicon with cobalt, nickel, iron, or the like, $SiO_x$, a mixture of a Si-containing material and a carbon material, or a composite of a Si-containing material and conductive carbon obtained by coating or combining the Si-containing material with the conductive carbon, for example.

$SiO_x$ is a compound that includes Si and at least one of SiO and $SiO_2$, where x is normally not less than 0.01 and less than 2. $SiO_x$ can, for example, be formed by utilizing a disproportionation reaction of silicon monoxide (SiO). Specifically, $SiO_x$ can be prepared by heat-treating SiO, optionally in the presence of a polymer such as polyvinyl alcohol, to produce silicon and silicon dioxide. The heat treatment can be performed in an inert gas atmosphere after SiO is optionally pulverized and mixed with the polymer.

The mixture of a Si-containing material and a carbon material may be a mixture obtained by pulverizing and mixing a Si-containing material such as silicon or $SiO_x$ with a carbon material such as a carbonaceous material or a graphitic material, optionally in the presence of a polymer such as polyvinyl alcohol. Any of the materials that can be used as a carbon-based negative electrode active material may be used as the carbonaceous material or graphitic material.

The composite of a Si-containing material and conductive carbon may, for example, be a compound obtained by heat-treating a pulverized mixture of SiO, a polymer such as polyvinyl alcohol, and optionally a carbon material in an inert gas atmosphere, for example. In a situation in which a high temperature is adopted in the heat treatment of the pulverized mixture, this produces a composite (Si-$SiO_x$-C composite) in which $SiO_x$ produced through a disproportionation reaction of SiO is dispersed in a matrix of conductive carbon formed of the carbonized polymer and the optionally compounded carbon material. Moreover, in a situation in which a comparatively low temperature is adopted in the heat treatment of the pulverized mixture, this produces a composite (SiO-C) in which Si in SiO has been partially replaced by conductive carbon.

Note that one of the above-described negative electrode active materials may be used individually, or two or more of the above-described negative electrode active materials may be used in combination.

<Other components>

Examples of other components that can be compounded in the slurry composition include, but are not specifically limited to, dispersants, viscosity modifiers (thickeners), phosphite antioxidants, metal scavengers, and conductive materials. One other component may be used individually, or two or more other components may be used in combination in a freely selected ratio.

<Production of slurry composition>

No specific limitations are placed on the method by which the slurry composition is produced.

For example, the slurry composition can be produced by mixing the binder composition, the electrode active material, and other components that are used as necessary in the presence of an aqueous phase (aqueous medium) that is typically contained in the binder composition.

No specific limitations are placed on the mixing method, and mixing can be performed using any stirrer or disperser that can normally be used.

(Electrode for non-aqueous secondary battery)

The presently disclosed electrode for a non-aqueous secondary battery includes an electrode mixed material layer formed using the slurry composition for a non-aqueous secondary battery electrode set forth above. Accordingly, the electrode mixed material layer is formed of a dried product of the slurry composition set forth above, normally contains an electrode active material and a component derived from a particulate binder, and optionally further contains other components. Components contained in the electrode mixed material layer are components that were contained in the slurry composition for a non-aqueous secondary battery electrode set forth above, and the preferred ratio of these components is the same as the preferred ratio of the components in the slurry composition. Moreover, although the particulate binder is present in a particulate form in the slurry composition, the particulate binder may have a particulate form or may have any other form in the electrode mixed material layer that is formed using the slurry composition.

The presently disclosed electrode for a non-aqueous secondary battery has excellent peel strength as a result of the electrode mixed material layer being formed using the slurry composition for a non-aqueous secondary battery electrode set forth above. Consequently, a non-aqueous secondary battery that includes the presently disclosed electrode for a non-aqueous secondary battery can display excellent performance. For example, the non-aqueous secondary battery has excellent battery characteristics such as cycle characteristics and also has reduced internal resistance.

<Production of electrode for non-aqueous secondary battery>

The electrode mixed material layer of the presently disclosed electrode for a non-aqueous secondary battery can be formed using any of the following methods, for example.

(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

Note that by using the presently disclosed slurry composition, it is possible to cause a formed electrode to display excellent peel strength even in a situation in which the electrode is produced through high-speed application of the slurry composition onto the current collector, and thus the slurry composition can be used in high-speed coating.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer. Note that by using the presently disclosed slurry composition, it is possible to cause a formed electrode to display excellent peel strength even in a situation in which the electrode is produced through high-speed drying of the slurry composition that has been applied onto the current collector.

After the drying step, the electrode mixed material layer may be further subjected to a pressing process, such as mold pressing or roll pressing. This pressing process can improve close adherence between the electrode mixed material layer and the current collector and also enables densification of the obtained electrode mixed material layer. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery includes a positive electrode, a negative electrode, an electrolyte solution, and a separator, wherein the electrode for a non-aqueous secondary battery set forth above is used as at least one of the positive electrode and the negative electrode. Moreover, the presently disclosed non-aqueous secondary battery can display excellent performance (for example, has excellent battery characteristics such as cycle characteristics and reduced internal resistance) as a result of being produced by using the electrode for a non-aqueous secondary battery set forth above as at least one of the positive electrode and the negative electrode.

Although the following describes, as one example, a case in which the secondary battery is a lithium ion secondary battery, the presently disclosed secondary battery is not limited to the following example.

<Electrodes>

Known electrodes that are used in production of secondary batteries can be used without any specific limitations in the presently disclosed non-aqueous secondary battery as an electrode other than the presently disclosed electrode for a non-aqueous secondary battery set forth above. Specifically, an electrode obtained by forming an electrode mixed material layer on a current collector by a known production method can be used as an electrode other than the presently disclosed electrode for a non-aqueous secondary battery set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In the presently disclosed non-aqueous secondary battery, the electrode for a non-aqueous secondary battery set forth above is used as at least one of the positive electrode and the negative electrode, and is preferably used as the negative electrode. The presently disclosed non-aqueous secondary battery may be provided with an overcurrent preventing device such as a fuse or a PTC device, an expanded metal, or a lead plate, as necessary, in order to prevent pressure increase inside the secondary battery and occurrence of overcharging or overdischarging. The shape of the secondary battery may be a coin type, button type, sheet type, cylinder type, prismatic type, or flat type, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the examples and comparative examples, the following methods were used to measure or evaluate the average particle diameter Da of a particulate binder measured by dynamic light scattering, the volume-average particle diameter Db of a particulate binder measured by laser diffraction/scattering, the viscosity and tackiness of a binder composition, the peel strength of a negative electrode, and the internal resistance and cycle characteristics of a lithium ion secondary battery.

(Measurement and evaluation methods)

<Average particle diameter Da of particulate binder measured by dynamic light scattering>

A binder composition was adjusted to a pH of 6.0 or 8.0 through addition of hydrochloric acid or sodium hydroxide as necessary. A particle size analyzer having dynamic light scattering as a measurement principle (produced by Otsuka Electronics Co., Ltd.; model: nanoSAQLA) was used to measure a particle size distribution (by volume) of the pH-adjusted binder composition (water dispersion of a particulate binder) that was obtained as described above, and the particle diameter (D50) at which cumulative frequency of light scattering intensity calculated from a small diameter end in the measured particle size distribution reached 50% was taken to be the average particle diameter Da. Note that the measurement conditions in dynamic light scattering were as follows.

Dispersion medium: Deionized water
Measurement temperature: 25 ± 1°C
Measurement concentration (solid content concentration): 0.5 mass%
Scattering angle: 168.8°
Light source laser wavelength: 660 nm

<Volume-average particle diameter Db of particulate binder measured by laser diffraction/scattering>

A particle size analyzer having laser diffraction/scattering as a measurement principle (Beckman Coulter, Inc.; product name: LS13 320 XR) was used to measure a particle size distribution (by volume) of an obtained binder composition (water dispersion of a particulate binder), and the particle diameter (D50) at which cumulative volume calculated from a small diameter end in the measured particle size distribution reached 50% was taken to be the average particle diameter Db.

<Viscosity of binder composition>

An obtained binder composition was adjusted to a solid content concentration of 30 mass% through addition of water or removal of water by concentrating and was adjusted to a pH of 6.0 or 8.0 through addition of hydrochloric acid or sodium hydroxide as necessary. Thereafter, the viscosity of the binder composition was measured using a B-type viscometer (produced by Toki Sangyo Co., Ltd.; product name: TVB-10; rotation speed: 60 rpm). The temperature during viscosity measurement was 25°C.

<Tackiness of binder composition>

A binder composition was applied onto copper foil such as to have a film thickness after drying of 5 μm and was dried at 110°C for 5 minutes to produce a binder film. The produced film was cut to dimensions of 30 mm × 20 mm to obtain a test specimen. A probe made of SUS (Ø10 mm) was used to perform a pressing operation with respect to one side of the test specimen under conditions of a pressing speed of 3 mm/s, a pressing load of 100 gf, and a pressing holding time of 1 s. Next, the tack strength (N) when the SUS probe was pulled upward with a pulling speed of 3 mm/s was measured and was evaluated by the following standard. A lower tack strength results in better productivity without the occurrence of adhesion to a dryer or the like. (Note that high tack strength is undesirable not only due to the start of strong adhesion to a wall of a dryer, a conveyer, or the like and reduction of production efficiency, but also because problems such as the inability to achieve uniform quality arise.) Moreover, lower tack strength results in lower adhesiveness to a roll during processing using a roll, and can be judged to indicate better roll processability.

    A: Tack strength of 4 N or less
    B: Tack strength of more than 4 N and not more than 8 N
    C: Tack strength of more than 8 N

<Peel strength of negative electrode>

A produced negative electrode was cut out as a rectangle of 100 mm in length by 10 mm in width to obtain a test specimen. This test specimen was placed with the surface of the negative electrode mixed material layer facing downward, and cellophane tape was affixed to the surface of the negative electrode mixed material layer. Tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner, an average value of the measurements was determined, and this average value was taken to be the peel strength and was evaluated by the following standard.

    A: Peel strength of 10 N/m or more
    B: Peel strength of not less than 7 N/m and less than 10 N/m
    C: Peel strength of less than 7 N/m

<Internal resistance of lithium ion secondary battery>

IV resistance was measured as follows in order to evaluate internal resistance of a lithium ion secondary battery. Conditioning was performed through three repetitions of an operation of charging to a voltage of 4.2 V with a charge rate of 0.1C, resting for 10 minutes, and then constant current (CC) discharging to 3.0 V with a discharge rate of 0.1C at a temperature of 25°C. Thereafter, the lithium ion secondary battery was charged to 3.75 V at 1C (C is a value expressed by rated capacity (mA)/1 hour (h)) in a -10°C atmosphere and was then subjected to 20 seconds of charging and 20 seconds of discharging at each of 0.5C, 1.0C, 1.5C, and 2.0C, centered on 3.75 V. The battery voltage after 15 seconds at the charging side in each of these cases was plotted against the current value, and the gradient of this plot was determined as the IV resistance (Ω). The obtained IV resistance value (Ω) was evaluated by the following standard through comparison with the IV resistance in Comparative Example 1. Note that a smaller IV resistance value indicates that the secondary battery has lower internal resistance.

> A: Not less than 80% and less than 85% relative to IV resistance in Comparative Example 1
> B: Not less than 85% and less than 95% relative to IV resistance in Comparative Example 1
> C: Not less than 95% and less than 105% relative to IV resistance in Comparative Example 1
> D: 105% or more relative to IV resistance in Comparative Example 1

<Cycle characteristics of lithium ion secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, constant current (CC) constant voltage (CV) charging (upper limit cell voltage 4.20 V) was performed by a 0.2C constant-current method, and then CC discharging to 3.00 V was performed by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the $1^{st}$ cycle was defined as X1 and the discharge capacity of the $100^{th}$ cycle was defined as X2. The discharge capacity X1 and the discharge capacity X2 were used to determine a capacity change rate expressed by $\Delta C' = (X2/X1) \times 100(\%)$, which was then evaluated by the following standard. A larger value for the capacity change rate $\Delta C'$ indicates better cycle characteristics.

> A: $\Delta C'$ of 93% or more
> B: $\Delta C'$ of not less than 90% and less than 93%
> C: $\Delta C'$ of not less than 87% and less than 90%
> D: $\Delta C'$ of less than 87%

(Example 1)

<Production of water dispersion containing first particulate binder>

First, in a first stage of polymerization, a 5 MPa pressure-resistant vessel A equipped with a stirrer was charged with 24.0 parts of styrene as an aromatic vinyl monomer, 73.0 parts of 1,3-butadiene as an aliphatic conjugated diene monomer, 0.6 parts of an alkyl diphenyl ether disulfonic acid salt as an emulsifier, 143 parts of deionized water, 0.1 parts of tert-dodecyl mercaptan as a chain transfer agent, and 0.3 parts of potassium persulfate as a polymerization initiator. These materials were thoroughly stirred, were then heated to 55°C to initiate polymerization, and were reacted for 10 hours. Next, these materials were heated to 65°C and were reacted for a further 6 hours. Next, as a second stage of polymerization, 3 parts of methacrylic acid was added, was heated to 85°C, and was reacted for a further 6 hours. Thereafter, unreacted monomer was removed by thermal-vacuum distillation, and 1 part of a Wingstay L dispersion as an antioxidant was added to yield a water dispersion containing a first particulate binder.

<Production of water dispersion containing second particulate binder>

First, in a first stage of polymerization, a reactor B including a stirrer was charged with 76.5 parts of butyl acrylate as a (meth)acrylic acid ester monomer, 1.0 parts of methacrylic acid as an acidic functional group-containing monomer (ethylenically unsaturated carboxylic acid monomer), 1.5 parts of N-methylolacrylamide as an unsaturated carboxylic acid amide monomer, 1.5 parts of allyl glycidyl ether as a cross-linkable monomer unit (unsaturated carboxylic acid epoxy monomer), 1.5 parts of acrylonitrile as another monomer 2, 0.3 parts of sodium dodecylbenzenesulfonate as an emulsifier, 0.5 parts of ammonium persulfate as a polymerization initiator, and 300 parts of deionized water. These materials were thoroughly stirred, were then heated to 70°C, and a reaction was caused to proceed for 4 hours. Next, in a second stage of polymerization, 15.0 parts of styrene as an aromatic vinyl monomer was added into the polymerization system within an addition time of 1 hour. Once the addition was complete, heating was performed to 80°C, and the reaction was caused to proceed for 2 hours. Thereafter, in a third stage of polymerization, 3.0 parts of methacrylic acid as an acidic functional group-containing monomer (ethylenically unsaturated carboxylic acid monomer) was added, and a reaction was performed for a further 4 hours. A water dispersion containing a polymerization product that was obtained in this manner was cooled to 30°C or lower. The above yielded a water dispersion containing a second particulate binder having a structure containing a polymer formed in the third stage of polymerization in a surface layer portion of a core-shell particle having a core portion containing a polymer formed in the first stage of polymerization and a shell portion containing a polymer formed in the second stage of polymerization.

<Production of binder composition through mixing of water dispersions>

The water dispersion containing the first particulate binder and the water dispersion containing the second particulate binder were mixed to obtain a binder composition for a lithium ion secondary battery negative electrode. With regards to the mass ratio of particulate binders contained in the binder composition, the blending proportion of the first particulate binder was 80% and the blending proportion of the second particulate binder was 20%.

The obtained binder composition was used to measure or evaluate the average particle diameter Da of the particulate binder at pH 6.0 and pH 8.0 measured by dynamic light scattering, the volume-average particle diameter Db of the particulate binder measured by laser diffraction/scattering, and the tackiness of the binder composition. The results are shown in Table 1.

<Production of slurry composition for non-aqueous secondary battery negative electrode>

A planetary mixer equipped with a disper blade was charged with 100 parts of artificial graphite (tap density: 0.85 g/cm$^3$; capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Daicel Corporation; product name: Daicel 2200) as a thickener to obtain a mixture. The obtained mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixed liquid. Deionized water and 2.0 parts in terms of solid content of the binder composition produced as described above were added to the obtained mixed liquid, and the final solid content concentration was adjusted to 48%. A further 10 minutes of mixing was performed, and then defoaming was performed under reduced pressure to yield a slurry composition for a negative electrode having good fluidity.

<Formation of negative electrode>

The obtained slurry composition for a negative electrode was applied onto copper foil of 15 $\mu$m in thickness serving as a current collector by a comma coater at a speed of 1.2 m/min (normal speed) such as to have a coating weight after drying of 10.5 mg/cm$^2$. The slurry composition for a negative electrode was dried by conveying the copper foil inside a 120°C oven for 1 minute and a 130°C oven for 1 minute at a speed of 1.2 m/min.

The resultant negative electrode web was rolled by roll pressing to obtain a negative electrode (negative electrode obtained at normal coating speed) having a negative electrode mixed material layer density of 1.70 g/cm$^3$. The peel strength of the negative electrode was evaluated. The result is shown in Table 1. In addition, a negative electrode for a case in which production is performed by high-speed coating was obtained by performing the same operations as described above with the exception that the speed during application of the slurry composition onto the copper foil was changed from 1.2 m/min to 3.6 m/min (high speed), the conveyance speed during drying was changed from 1.2 m/min to 3.6 m/min, and the conveyance was for 20 seconds in a 120°C oven and for 20 seconds in a 150°C oven. The peel strength of the negative electrode when produced by high-speed coating was evaluated. The result is shown in Table 1.

<Formation of positive electrode>

A slurry composition for a positive electrode was obtained by mixing 100 parts of LiCoO$_2$ having a median diameter of 12 $\mu$m as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and then mixing these materials in a planetary mixer.

The obtained slurry composition for a positive electrode was applied onto aluminum foil of 20 $\mu$m in thickness serving as a current collector by a comma coater such as to have a coating weight after drying of 23 mg/cm$^2$. The slurry composition for a positive electrode was dried by conveying the aluminum foil inside a 60°C oven for 2 minutes at a speed of 0.5 m/min. Thereafter, 2 minutes of heat treatment was performed at 120°C to obtain a positive electrode web. The positive electrode web was rolled by roll pressing to obtain a positive electrode having a positive electrode mixed material layer density of 4.0 g/cm$^3$.

<Preparation of separator>

A separator made of a single layer of polypropylene (produced by Celgard, LLC.; product name: Celgard 2500) was prepared as a separator formed of a separator substrate.

<Production of lithium ion secondary battery>

The post-pressing positive electrode for a lithium ion secondary battery and the post-pressing negative electrode for a lithium ion secondary battery (negative electrode obtained at normal coating speed) that were produced as described above were arranged with a separator (polypropylene microporous membrane of 20 μm in thickness) therebetween in an order of "separator/positive electrode/separator/negative electrode" to obtain a laminate. Next, the laminate of electrodes and separators was wound around a core of 20 mm in diameter to obtain a roll including a positive electrode, a separator, and a negative electrode. The obtained roll was then compressed to a thickness of 4.5 mm from one direction at a speed of 10 mm/s to obtain a flattened roll. This flattened roll had an elliptical shape in plan view, and a ratio of the major axis and the minor axis thereof (major axis/minor axis) was 7.7. In addition, a non-aqueous electrolyte solution (LiPF$_6$ solution of 1.0 M in concentration; solvent: mixed solvent of ethylene carbonate (EC)/ethyl methyl carbonate (EMC) = 3/7 (mass ratio) having 2 volume% of vinylene carbonate (VC) added as an additive) was prepared.

Next, the flattened roll was housed inside a laminate case made of aluminum together with the non-aqueous electrolyte solution. After connecting a negative electrode lead and a positive electrode lead at specific locations, an opening of the laminate case was thermally sealed to produce a laminate-type lithium ion secondary battery as a non-aqueous secondary battery. Note that the obtained secondary battery had a pouch shape of 35 mm (width) × 48 mm (height) × 5 mm (thickness) and had a nominal capacity of 700 mAh.

The internal resistance and cycle characteristics of this lithium ion secondary battery were evaluated. The results are shown in Table 1.

(Example 2)

A binder composition, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition through mixing of water dispersions, the mass ratio of particulate binders contained in the binder composition was changed such that the blending proportion of the first particulate binder was 50% and the blending proportion of the second particulate binder was 50%. The results are shown in Table 1.

(Example 3)

A binder composition, a slurry composition for a non-aqueous secondary battery negative electrode, a negative electrode, a positive electrode, and a lithium ion secondary battery were each produced or prepared, and measurements and evaluations were performed in the same way as in Example 2 with the exception that in production of the water dispersion containing the second particulate binder, the additive amount of butyl acrylate as a (meth)acrylic acid ester monomer used in the first stage of polymerization was changed from 76.5 parts to 74.5 parts, and the additive amount of methacrylic acid as an ethylenically unsaturated carboxylic acid monomer used in the third stage of polymerization was changed from 3.0 parts to 5.0 parts. The results are shown in Table 1.

(Example 4)

A binder composition, a slurry composition for a non-aqueous secondary battery negative electrode, a negative electrode, a positive electrode, and a lithium ion secondary battery were each produced or prepared, and measurements and evaluations were performed in the same way as in Example 2 with the exception that in production of the water dispersion containing the second particulate binder, the additive amount of butyl acrylate as a (meth)acrylic acid ester monomer used in the first stage of polymerization was changed from 76.5 parts to 75.5 parts, and the additive amount of methacrylic acid as an ethylenically unsaturated carboxylic acid monomer used in the third stage of polymerization was changed from 3.0 parts to 20.0 parts. The results are shown in Table 1.

(Example 5)

A binder composition, a slurry composition for a non-aqueous secondary battery negative electrode, a negative electrode, a positive electrode, and a lithium ion secondary battery were each produced or prepared, and measurements and evaluations were performed in the same way as in Example 2 with the exception that in production of the water dispersion containing the second particulate binder, the chemical composition of monomers used in the first stage of polymerization was changed to 79.5 parts of butyl acrylate as a (meth)acrylic acid ester monomer, 1.0 parts of methacrylic acid as an acidic functional group-containing monomer (ethylenically unsaturated carboxylic acid monomer), and 1.5 parts of acrylonitrile as another monomer. The results are shown in Table 1.

(Example 6)

A binder composition, a slurry composition for a non-aqueous secondary battery negative electrode, a negative electrode, a positive electrode, and a lithium ion secondary battery were each produced or prepared, and measurements and evaluations were performed in the same way as in Example 2 with the exception that in production of the water dispersion containing the second particulate binder, the chemical composition of monomers used in the first stage of polymerization was changed to 78.0 parts of butyl acrylate as a (meth)acrylic acid ester monomer, 1.0 parts of methacrylic acid as an acidic functional group-containing monomer (ethylenically unsaturated carboxylic acid monomer), 1.5 parts of N-methylolacrylamide as an unsaturated carboxylic acid amide monomer, and 1.5 parts of acrylonitrile as another monomer. The results are shown in Table 1.

(Example 7)

A binder composition, a slurry composition for a non-aqueous secondary battery negative electrode, a negative electrode, a positive electrode, and a lithium ion secondary battery were each produced or prepared, and measurements and evaluations were performed in the same way as in Example 2 with the exception that in production of the water dispersion containing the second particulate binder, the chemical composition of monomers used in the first stage of polymerization was changed to 78.0 parts of butyl acrylate as a (meth)acrylic acid ester monomer, 1.0 parts of methacrylic acid as an acidic functional group-containing monomer (ethylenically unsaturated carboxylic acid monomer), 1.5 parts of allyl glycidyl ether as a cross-linkable monomer unit (unsaturated carboxylic acid epoxy monomer), and 1.5 parts of acrylonitrile as another monomer. The results are shown in Table 1.

(Example 8)

A binder composition, a slurry composition for a non-aqueous secondary battery negative electrode, a negative electrode, a positive electrode, and a lithium ion secondary battery were each produced or prepared, and measurements and evaluations were performed in the same way as in Example 2 with the exception that in production of the water dispersion containing the first particulate binder, the chemical composition of monomers used in the first stage of polymerization was changed to 19.0 parts of styrene as an aromatic vinyl monomer, 68.0 parts of 1,3-butadiene as an aliphatic conjugated diene monomer, and 10.0 parts of butyl acrylate as another monomer 1. The results are shown in Table 1.

(Example 9)

A binder composition, a slurry composition for a non-aqueous secondary battery negative electrode, a negative electrode, a positive electrode, and a lithium ion secondary battery were each produced or prepared, and measurements and evaluations were performed in the same way as in Example 8 with the exception that in production of the water dispersion containing the first particulate binder, the other monomer 1 used in the first stage of polymerization was changed from butyl acrylate to acrylonitrile. The results are shown in Table 1.

(Example 10)

A binder composition, a slurry composition for a non-aqueous secondary battery negative electrode, a negative electrode, a positive electrode, and a lithium ion secondary battery were each produced or prepared, and measurements and evaluations were performed in the same way as in Example 2 with the exception that in production of the water dispersion containing the second particulate binder, the chemical composition of monomers used in the first stage of polymerization was changed to 82.5 parts of butyl acrylate as a (meth)acrylic acid ester monomer, 1.0 parts of methacrylic acid as an ethylenically unsaturated carboxylic acid monomer, and 1.5 parts of acrylonitrile as another monomer, and the third stage of polymerization was not performed. The results are shown in Table 1.

(Example 11)

A binder composition, a slurry composition for a non-aqueous secondary battery negative electrode, a negative electrode, a positive electrode, and a lithium ion secondary battery were each produced or prepared, and measurements and evaluations were performed in the same way as in Example 3 with the exception that in production of the water dispersion containing the first particulate binder, the chemical composition of monomers used in the first stage of polymerization was changed to 59.0 parts of styrene as an aromatic vinyl monomer, 39.0 parts of 1,3-butadiene as an aliphatic conjugated diene monomer, and 2.0 parts of itaconic acid as an acidic functional group-containing monomer (ethylenically unsaturated carboxylic acid monomer), and the second stage of polymerization was not performed. The results are shown in Table 1.

(Comparative Example 1)

A slurry composition for a non-aqueous secondary battery negative electrode, a negative electrode, a positive electrode, and a lithium ion secondary battery were each produced or prepared, and measurements and evaluations were performed in the same way as in Example 11 with the exception that the water dispersion containing the first particulate binder was used in that form as a binder composition (first particulate binder = 100%). The results are shown in Table 1.

(Comparative Example 2)

A slurry composition for a non-aqueous secondary battery negative electrode, a negative electrode, a positive electrode, and a lithium ion secondary battery were each produced or prepared, and measurements and evaluations were performed in the same way as in Example 10 with the exception that the water dispersion containing the second particulate binder was used in that form as a binder composition (second particulate binder = 100%). The results are shown in Table 1.

(Comparative Example 3)

A slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the water dispersion containing the second particulate binder, the additive amount of butyl acrylate as a (meth)acrylic acid ester monomer used in the first stage of polymerization was changed from 76.5 parts to 79.5 parts and the third stage of polymerization was not performed, and also that the water dispersion of the second particulate binder obtained in this manner was used in that form as a binder composition (second particulate binder = 100%). The results are shown in Table 1.

(Comparative Example 4)

A binder composition, a slurry composition for a non-aqueous secondary battery negative electrode, a negative electrode, a positive electrode, and a lithium ion secondary battery were each produced or prepared, and measurements and evaluations were performed in the same way as in Example 11 with the exception that in production of the water dispersion containing the second particulate binder, the chemical composition of monomers used in the first stage of polymerization was changed to 81.5 parts of butyl acrylate as a (meth)acrylic acid ester monomer, 1.0 parts of methacrylic acid as an ethylenically unsaturated carboxylic acid monomer, and 1.5 parts of acrylonitrile as another monomer, the chemical composition of monomers used in the second stage of polymerization was changed to 15.0 parts of styrene as an aromatic vinyl monomer and 1.0 parts of methacrylic acid as an ethylenically unsaturated carboxylic acid monomer, and the third stage of polymerization was not performed. The results are shown in Table 1.

(Comparative Example 5)

A binder composition, a slurry composition for a non-aqueous secondary battery negative electrode, a negative electrode, a positive electrode, and a lithium ion secondary battery were each produced or prepared, and measurements and evaluations were performed in the same way as in Example 11 with the exception that in production of the water dispersion containing the second particulate binder, the additive amount of butyl acrylate as a (meth)acrylic acid ester monomer used in the first stage of polymerization was changed from 74.5 parts to 79.5 parts and the third stage of polymerization was not performed, and also that in production of the binder composition through mixing of water dispersions, ARON T-50 (produced by Toagosei Co., Ltd.), which is a polycarboxylic acid, was added, and the composition ratio of the binder composition was changed such that the blending proportion of the first particulate binder was 47.5%, the blending proportion of the second particulate binder was 47.5%, and the blending proportion of the polycarboxylic acid ARON T-50 was 5.0%. The results are shown in Table 1.

In Table 1:

"St" indicates styrene;
"BD" indicates 1,3-butadiene;
"IA" indicates itaconic acid;
"BA" indicates butyl acrylate;
"AN" indicates acrylonitrile;
"MAA" indicates methacrylic acid;
"NMA" indicates N-methylolacrylamide;
"AGE" indicates allyl glycidyl ether; and
"Emulsifier" indicates sodium dodecylbenzenesulfonate.

[Table 1]

| First polymer | Added in first stage of polymerization | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|
| | Aromatic vinyl monomer | Type | | St | St | St | St | St | St | St | St | St | St | St | St | | | St | St |
| | | Amount [parts by mass] | | 24.0 | 24.0 | 24.0 | 24.0 | 24.0 | 24.0 | 24.0 | 19.0 | 19.0 | 24.0 | 59.0 | 59.0 | | | 59.0 | 59.0 |
| | Aliphatic conjugated diene monomer | Type | | BD | BD | BD | BD | BD | BD | BD | BD | BD | BD | BD | BD | | | BD | BD |
| | | Amount [parts by mass] | | 73.0 | 73.0 | 73.0 | 73.0 | 73.0 | 73.0 | 73.0 | 68.0 | 68.0 | 73.0 | 39.0 | 39.0 | | | 39.0 | 39.0 |
| | Acidic functional group-containing monomer unit (carboxyl group-containing monomer) | Type | | | | | | | | | | | | IA | IA | | | IA | IA |
| | | Amount [parts by mass] | | | | | | | | | | | | 2.0 | 2.0 | | | 2.0 | 2.0 |
| | Other monomer 1 | Type | | | | | | | | | BA | AN | | | | | | | |
| | | Amount [parts by mass] | | | | | | | | | 10.0 | 10.0 | | | | | | | |

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|
| Added in second stage of polymerization | Acidic functional group-containing monomer unit (carboxyl group-containing monomer) | Type | MAA | MAA | MAA | MAA | MAA | MAA | MAA | MAA | MAA | MAA | | | | | | |
| | | Amount [parts by mass] | 3.0 | 3.0 | 3.0 | 3.0 | 3.0 | 3.0 | 3.0 | 3.0 | 3.0 | 3.0 | | | | | | |
| Total monomer unit content | | Amount [parts by mass] | 100.0 | 100.0 | 100.0 | 100.0 | 100.0 | 100.0 | 100.0 | 100.0 | 100.0 | 100.0 | 100.0 | 100.0 | | | 100.0 | 100.0 |
| Amount of emulsifier in polymer | | Amount [parts by mass] | 0.7 | 0.7 | 0.7 | 0.7 | 0.7 | 0.7 | 0.7 | 0.7 | 0.7 | 0.7 | 0.7 | 0.7 | | | 0.7 | 0.7 |
| Second polymer | (Meth)acrylic acid ester monomer | Type | BA | BA | BA | BA | BA | BA | BA | BA | BA | BA | BA | | BA | BA | BA | BA |
| | | Amount [parts by mass] | 76.5 | 76.5 | 74.5 | 75.5 | 79.5 | 78.0 | 78.0 | 76.5 | 76.5 | 82.5 | 74.5 | | 82.5 | 79.5 | 81.5 | 79.5 |

EP 4 564 482 A1

32

(continued)

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 | omparative Example 3 | Comparative Example 4 | Comparative Example 5 |
|---|---|---|---|---|---|---|---|---|---|---|---|---|---|---|---|---|---|---|
| Added in first stage of polymerization | Acidic functional group-containing monomer unit (carboxyl group-containing monomer) | Type / Amount [parts by mass] | MAA / 1.0 | MAA / 1.0 | MAA / 1.0 | MAA / 1.0 | MAA / 1.0 | MAA / 1.0 | MAA / 1.0 | MAA / 1.0 | MAA / 1.0 | MAA / 1.0 | MAA / 1.0 | | MAA / 1.0 | MAA / 1.0 | MAA / 1.0 | MAA / 1.0 |
| | Unsaturated carboxylic acid amide monomer | Type / Amount [parts by mass] | NMA / 1.5 | NMA / 1.5 | NMA / 1.5 | NMA / 1.5 | | NMA / 1.5 | | NMA / 1.5 | NMA / 1.5 | | NMA / 1.5 | | | NMA / 1.5 | | NMA / 1.5 |
| | Cross-linkable monomer unit (unsaturated carboxylic acid epoxy monomer) | Type / Amount [parts by mass] | AGE / 1.5 | AGE / 1.5 | AGE / 1.5 | AGE / 1.5 | | | AGE / 1.5 | AGE / 1.5 | AGE / 1.5 | | AGE / 1.5 | | | AGE / 1.5 | | AGE / 1.5 |
| | Other monomer 2 | Type / Amount [parts by mass] | AN / 1.5 | AN / 1.5 | AN / 1.5 | AN / 1.5 | AN / 1.5 | AN / 1.5 | AN / 1.5 | AN / 1.5 | AN / 1.5 | AN / 1.5 | AN / 1.5 | | AN / 1.5 | AN / 1.5 | AN / 1.5 | AN / 1.5 |

EP 4 564 482 A1

33

| | | | | Example 1 | Example 2 | Example 3 | Example 4 | Example 5 | Example 6 | Example 7 | Example 8 | Example 9 | Example 10 | Example 11 | Comparative Example 1 | Comparative Example 2 | omparative Example 3 | Comparative Example 4 | Comparative Example 5 |
|---|---|---|---|---|---|---|---|---|---|---|---|---|---|---|---|---|---|---|---|
| Added in second stage of polymerization | Aromatic vinyl monomer | Type | | St | St | St | St | St | St | St | St | St | St | St | | St | St | St | St |
| | | Amount [parts by mass] | | 15.0 | 15.0 | 15.0 | 15.0 | 15.0 | 15.0 | 15.0 | 15.0 | 15.0 | 15.0 | 15.0 | | 15.0 | 15.0 | 15.0 | 15.0 |
| | Acidic functional group-containing monomer unit (carboxyl group-containing monomer) | Type | | | | | | | | | | | | | | | | MAA | |
| | | Amount [parts by mass] | | | | | | | | | | | | | | | | 1.0 | |
| Added in third stage of polymerization | Acidic functional group-containing monomer unit (carboxyl group-containing monomer) | Type | | MAA | MAA | MAA | MAA | MAA | MAA | MAA | MAA | MAA | | MAA | | | | | |
| | | Amount [parts by mass] | | 3.0 | 3.0 | 5.0 | 200 | 3.0 | 3.0 | 3.0 | 3.0 | 3.0 | | 5.0 | | | | | |
| Total monomer unit content | | Amount [parts by mass] | | 100.0 | 100.0 | 100.0 | 116.0 | 100.0 | 100.0 | 100.0 | 100.0 | 100.0 | 100.0 | 100.0 | 0.0 | 100.0 | 100.0 | 100.0 | |

EP 4 564 482 A1

34

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|
| | Amount of emulsifier in polymer | Amount [parts by mass] | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | |
| | Mixed with first polymer | Type Amount [parts by mass] | | | | | | | | | | | | | | | | ARON T-50 5 |
| | Fist polymer | Blending proportion [%] | 80 | 50 | 50 | 50 | 50 | 50 | 50 | 50 | 50 | 50 | 50 | 100 | | | 50 | 47.5 |
| | Second polymer | Blending proportion [%] | 20 | 50 | 50 | 50 | 50 | 50 | 50 | 50 | 50 | 50 | 50 | | 100 | 100 | 50 | 47.5 |
| | B-type viscosity (@pH 6, solid content concentration 30%) | $\eta 1$ (mPa·sec) [mPa·s] | 40 | 20 | 40 | 60 | 20 | 20 | 20 | 20 | 20 | 20 | 3 | 6 | 3 | 3 | 4 | 20 |
| | B-type viscosity (@pH 8, solid content concentration 30%) | $\eta 2$ (mPa·sec) [mPa·s] | 1,200 | 400 | 600 | 1,000 | 800 | 800 | 800 | 800 | 800 | 300 | 50 | 10 | 5 | 5 | 7 | 300 |
| | @pH 6/@pH 8 | $(\eta 2-\eta 1)/\eta 1$ | 29.0 | 19.0 | 14.0 | 15.7 | 39.0 | 39.0 | 39.0 | 39.0 | 39.0 | 14.0 | 15.7 | 0.7 | 0.7 | 0.7 | 0.8 | 14.0 |
| Measurement | Volume-average particle diameter measured by laser diffraction/scattering | D1 (first polymer) [nm] | 12.0 | 120 | 120 | 120 | 2.0 | 120 | 12.0 | 120 | 120 | 75 | 170 | - | - | - | 130 | 130 |

EP 4 564 482 A1

35

(continued)

| | | | | Example 1 | Example 2 | Example 3 | Example 4 | Example 5 | Example 6 | Example 7 | Example 8 | Example 9 | Example 10 | Example 11 | Comparative Example 1 | Comparative Example 2 | omparative Example 3 | Comparative Example 4 | Comparative Example 5 |
|---|---|---|---|---|---|---|---|---|---|---|---|---|---|---|---|---|---|---|---|
| | | D2 (second polymer) | [nm] | 430 | 430 | 430 | 450 | 430 | 430 | 430 | 430 | 430 | 330 | 430 | - | - | - | 300 | 300 |
| | Average particle diameter measured by dynamic light scattering | Db | [nm] | 125 | 140 | 180 | 200 | 140 | 140 | 140 | 85 | 85 | 85 | 190 | 130 | 288 | 340 | 12.5 | 125 |
| | | Da | [nm] | 200 | 180 | 230 | 250 | 180 | 180 | 180 | 170 | 170 | 170 | 200 | 125 | 281 | 355 | 109 | 109 |
| | | Da/Db | [-] | 1.60 | 1.29 | 1.28 | 1.25 | 1.29 | 1.29 | 1.29 | 2.00 | 2.00 | 2.00 | 1.05 | 0.96 | 0.97 | 1.04 | 0.87 | 0.87 |
| Evaluation | Binder tackiness | | | A | A | A | A | B | B | B | A | A | B | A | A | C | B | B | B |
| | Peel strength | | | A | A | A | A | B | A | A | A | A | B | B | C | C | C | C | C |
| | High-speed coating peel strength | | | A | A | A | A | B | A | A | B | B | B | B | C | C | C | C | C |
| | Internal resistance | | | B | A | A | B | A | A | A | A | A | A | A | C | B | B | C | C |
| | Cycle characteristics | | | B | A | A | B | B | B | B | A | A | B | B | C | C | C | C | C |

EP 4 564 482 A1

36

It can be seen from Table 1 that by using the binder compositions produced in Examples 1 to 11, which are within the scope of the present disclosure, it is possible to provide a binder composition for a non-aqueous secondary battery electrode that has good tackiness and that enables the formation of an electrode for a non-aqueous secondary battery having excellent peel strength.

INDUSTRIAL APPLICABILITY

According to the present disclosure, it is possible to provide a binder composition for a non-aqueous secondary battery electrode that has good tackiness and that enables the formation of an electrode for a non-aqueous secondary battery having excellent peel strength.

Moreover, according to the present disclosure, it is possible to provide a slurry composition for a non-aqueous secondary battery electrode that enables the formation of an electrode for a non-aqueous secondary battery having excellent peel strength.

Furthermore, according to the present disclosure, it is possible to provide an electrode for a non-aqueous secondary battery having excellent peel strength and a non-aqueous secondary battery including this electrode for a non-aqueous secondary battery.

**Claims**

1.    A binder composition for a non-aqueous secondary battery electrode comprising a particulate binder and water, wherein

a ratio $Da_{(pH8.0)}/Db$ of an average particle diameter $Da_{(pH8.0)}$ of the particulate binder measured by dynamic light scattering at pH 8.0 relative to a volume-average particle diameter $Db$ of the particulate binder measured by laser diffraction/scattering is 1.00 or more, and
when viscosity of the binder composition for a non-aqueous secondary battery electrode at a temperature of 25°C, a solid content concentration of 30.0 mass%, and a pH of 6.0 is taken to be $\eta1$ and viscosity of the binder composition for a non-aqueous secondary battery electrode at a temperature of 25°C, a solid content concentration of 30.0 mass%, and a pH of 8.0 is taken to be $\eta2$, a viscosity increase rate calculated by formula (I), shown below:

$$\text{viscosity increase rate} = \{(\eta2 - \eta1)/\eta1\} \cdots (I)$$

is $\times$ 1 or more.

2.    The binder composition for a non-aqueous secondary battery electrode according to claim 1, wherein the particulate binder includes a first particulate binder and a second particulate binder having a different chemical composition from the first particulate binder.

3.    The binder composition for a non-aqueous secondary battery electrode according to claim 2, wherein the first particulate binder has a volume-average particle diameter measured by laser diffraction/scattering of not less than 70 nm and not more than 200 nm, and the second particulate binder has a volume-average particle diameter measured by laser diffraction/scattering of not less than 150 nm and not more than 500 nm.

4.    The binder composition for a non-aqueous secondary battery electrode according to claim 2, wherein

the first particulate binder has a core-shell structure including a core portion and a shell portion at least partially covering an outer surface of the core portion, and
the second particulate binder includes a surface layer portion and a core-shell particle that is located at an inner side of the surface layer portion and that includes a core portion and a shell portion at least partially covering an outer surface of the core portion.

5.    The binder composition for a non-aqueous secondary battery electrode according to claim 4, wherein the shell portion of the first particulate binder and the surface layer portion of the second particulate polymer each contain a polymer including an acidic functional group-containing monomer unit in a proportion of 80 mass% or more.

6. The binder composition for a non-aqueous secondary battery electrode according to claim 4, wherein

the core portion of the first particulate binder contains a polymer including an aromatic vinyl monomer unit and an aliphatic conjugated diene monomer unit, and
the shell portion of the first particulate binder contains a polymer including an acidic functional group-containing monomer unit in a proportion of 80 mass% or more.

7. The binder composition for a non-aqueous secondary battery electrode according to claim 4, wherein

the core portion of the second particulate binder contains a polymer including a (meth)acrylic acid ester monomer unit in a proportion of 80 mass% or more,
the shell portion of the second particulate binder contains a polymer including an aromatic vinyl monomer unit in a proportion of 80 mass% or more, and
the surface layer portion of the second particulate binder contains a polymer including an acidic functional group-containing monomer unit in a proportion of 80 mass% or more.

8. The binder composition for a non-aqueous secondary battery electrode according to claim 7, wherein a proportion constituted by the core portion in the second particulate binder is not less than 50 mass% and not more than 95 mass%.

9. The binder composition for a non-aqueous secondary battery electrode according to claim 1, having a pH of not lower than 6.0 and not higher than 10.0.

10. A slurry composition for a non-aqueous secondary battery electrode comprising: an electrode active material; and the binder composition for a non-aqueous secondary battery electrode according to any one of claims 1 to 9.

11. An electrode for a non-aqueous secondary battery comprising an electrode mixed material layer formed using the slurry composition for a non-aqueous secondary battery electrode according to claim 10.

12. A non-aqueous secondary battery comprising a positive electrode, a negative electrode, a separator, and an electrolyte solution, wherein at least one of the positive electrode and the negative electrode is the electrode for a non-aqueous secondary battery according to claim 11.

## INTERNATIONAL SEARCH REPORT

| International application No. |
| --- |
| **PCT/JP2023/027653** |

**A.    CLASSIFICATION OF SUBJECT MATTER**

*H01M 4/62*(2006.01)i; *C08F 267/06*(2006.01)i; *C08F 279/02*(2006.01)i; *C08F 285/00*(2006.01)i; *H01M 4/13*(2010.01)i; *H01M 4/139*(2010.01)i; *H01M 10/052*(2010.01)i; *H01M 10/0566*(2010.01)i

FI:    H01M4/62 Z; C08F267/06; C08F279/02; C08F285/00; H01M4/13; H01M4/139; H01M10/052; H01M10/0566

According to International Patent Classification (IPC) or to both national classification and IPC

**B.    FIELDS SEARCHED**

Minimum documentation searched (classification system followed by classification symbols)

H01M4/62; C08F267/06; C08F279/02; C08F285/00; H01M4/13; H01M4/139; H01M10/052; H01M10/0566

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-69062 A (NIPPON ZEON CO) 06 April 2017 (2017-04-06) | 1-12 |
| A | WO 2016/035286 A1 (NIPPON ZEON CO) 10 March 2016 (2016-03-10) | 1-12 |
| A | JP 2012-182012 A (PANASONIC CORP) 20 September 2012 (2012-09-20) | 1-12 |

☐ Further documents are listed in the continuation of Box C.    ☑ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **11 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/027653**

| Patent document cited in search report | | | Publication date (day/month/year) | Patent family member(s) | | | Publication date (day/month/year) |
|---|---|---|---|---|---|---|---|
| JP | 2017-69062 | A | 06 April 2017 | US | 2018/0261845 | A1 | |
| | | | | WO | 2017/056489 | A1 | |
| | | | | EP | 3358661 | A1 | |
| | | | | CN | 108140838 | A | |
| | | | | KR | 10-2018-0063078 | A | |
| WO | 2016/035286 | A1 | 10 March 2016 | US | 2017/0256800 | A1 | |
| | | | | CN | 106663813 | A | |
| | | | | KR | 10-2017-0053615 | A | |
| JP | 2012-182012 | A | 20 September 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6645430 B
- JP 6627763 B
- JP 5701519 B
- WO 2010114119 A1
- JP 2013211246 A
- JP 2005097474 A
- JP 2013206624 A
- JP 2012204303 A